# EUROPÄISCHE PATENTSCHRIFT

(11) **EP 2 462 565 B1**
(45) Veröffentlichungstag und Bekanntmachung des Hinweises auf die Patenterteilung: **12.04.2017**
(21) Anmeldenummer: 10702323.6
(22) Anmeldetag: 04.02.2010
(51) Int. Cl.: G07D 7/20, G07D 7/12, G07D 7/00, B42D 15/00, G02B 3/00

(54) **SICHERHEITSANORDNUNG**
SECURITY ARRANGEMENT
DISPOSITIF DE SÉCURITÉ

(30) Priorität: 04.08.2009 WO PCT/EP2009/005641
(43) Veröffentlichungstag der Anmeldung: 13.06.2012
(73) Patentinhaber: Giesecke & Devrient GmbH, 81677 München (DE)
(72) Erfinder: KECK, Angelika, 81667 München (DE); HEINE, Astrid, 85551 Kirchheim (DE); MENGEL, Christoph, 83607 Holzkirchen (DE)
(86) Internationale Anmeldenummer: PCT/EP2010/051383
(87) Internationale Veröffentlichungsnummer: WO 2011/015384

(56) Entgegenhaltungen:
- WO-A2-2010/015382
- DE-A1-102005 028 162
- DE-A1-102005 062 132
- US-A- 5 995 638
- RUDOLF L. VAN RENESSE: "Optical Document Security, 3rd edition" 2005, ARTECH HOUSE , BOSTON LONDON , XP002554525 ISBN: 1580532586 Seite 146 - Seite 169

## Beschreibung

Die Erfindung betrifft eine Sicherheitsanordnung mit einem Sicherheitselement und einem Verifikationsmittel, sowie einen Datenträger mit einer solchen Sicherheitsanordnung.

Datenträger, wie Wert- oder Ausweisdokumente, oder auch andere Wertgegenstände, wie etwa Markenartikel, werden zur Absicherung oft mit Sicherheitselementen versehen, die eine Überprüfung der Echtheit des Gegenstands gestatten und die zugleich als Schutz vor unerlaubter Reproduktion dienen.

Der Begriff "Datenträger" umfasst auch nicht umlauffähige Vorstufen solcher Datenträger, die beispielsweise im Fall von Sicherheitspapier in quasi endloser Form vorliegen und zu einem späteren Zeitpunkt weiterverarbeitet werden. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, und auch kartenförmige Datenträger, insbesondere Chipkarten, sowie Produktsicherungselemente, wie Etiketten, Siegel, Verpackungen und dergleichen.

Ein Sicherheitselement kann in einen solchen Datenträger, beispielsweise in eine Banknote oder eine Chipkarte, eingebettet sein oder als selbsttragendes Transferelement ausgebildet sein, beispielsweise als Patch oder als Etikett, das nach seiner Herstellung auf einen zu sichernden Datenträger oder sonstigen Gegenstand aufgebracht wird.

Sicherheitselemente erzeugen häufig einen gut sichtbaren optischen Eindruck, weswegen solche Sicherheitselemente neben ihrer Funktion als Sicherungsmittel bisweilen auch ausschließlich als dekorative Elemente verwendet werden.

Um eine Fälschung oder Nachstellung von Sicherheitselementen beispielsweise mit hochwertigen Farbfotokopiergeräten zu verhindern, weisen Sicherheitselemente häufig optisch variable Elemente auf, die dem Betrachter unter verschiedenen Betrachtungswinkeln einen unterschiedlichen Bildeindruck vermitteln und etwa einen unterschiedlichen Farbeindruck oder auch unterschiedliche graphische Motive zeigen. In diesem Zusammenhang ist beispielsweise die Verwendung von beugungsoptischen Mikro- oder Nanostrukturen in Form von Prägehologrammen oder anderen hologrammähnlichen Beugungsstrukturen bekannt.

Zur Erzeugung optisch variabler Elemente ist weiterhin die Verwendung von Mikrolinsenanordnungen bekannt. Beispielsweise offenbart die EP 0 219 012 A2 eine regelmäßige Anordnung von parallelen, aneinanderstoßenden Zylinderlinsen, welche in Abhängigkeit von der Blickrichtung wegen der konvergierenden Wirkung der Zylinderlinsen nur einen streifenförmigen Bereich jeweils unterhalb einer Zylinderlinse zeigt. Unterhalb der Zylinderlinsen sind dabei streifenförmig zerlegte Bilder angeordnet, welche sich für einen Betrachter je nach Blickrichtung zu einem bestimmten Gesamtbild zusammensetzen. Je nach Betrachtungswinkel werden dabei bei horizontaler Anordnung der Zylinderlinsen verschiedene Bilder sichtbar, wodurch Kippbilder und Animationen erzeugt werden können. Liegen die Zylinderlinsen in vertikaler Richtung, so können stereoskopische Parallaxen in das Bild eingebracht werden, wodurch für den Betrachter ein räumlicher Eindruck erzeugt werden kann.

Neben der Verwendung von Zylinderlinsen ist auch die Verwendung einer regelmäßigen Anordnung von sphärischen Linsen bekannt, wie sie beispielsweise in einer Moiré-Vergrößerungsanordnung verwendet wird.

Die US 5 712 731 A betrifft die Verwendung einer solchen Moire-Vergrößerungsanordnung als Sicherheitsmerkmal. Die dort beschriebene Sicherheitsvorrichtung weist eine regelmäßige Anordnung von im Wesentlichen identischen gedruckten Mikrobildern auf sowie eine regelmäßige zweidimensionale Anordnung von im Wesentlichen identischen sphärischen Mikrolinsen. Die Mikrolinsenanordnung weist dabei im Wesentlichen dieselbe Teilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.

Die prinzipielle Funktionsweise derartiger Moire-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt bezeichnet Moiré-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, das in diesem Fall als vergrößertes und gegebenenfalls gedrehtes Bild der wiederholten Elemente des Bildrasters erscheint. Weitere Ausgestaltungsvarianten und Effekte, die auf diesem Mechanismus beruhen, sind beispielsweise in dem Artikel "Properties of moire magnifiers", Kamal et al., Optical Engineering 37 (11), S. 3007-3014 (November 1998), beschrieben.

Regelmäßige Mikrolinsenanordnungen können auch als Verifikationsmittel für Sicherheitselemente verwendet werden, wie dies in der EP 1 147 912 B1 beschrieben ist. Dabei werden bestimmte Strukturen eines Sicherheitselementes erst bei Betrachtung durch ein solches Verifikationselement für den Benutzer sichtbar, so dass die Funktion des Sicherheitselements für einen unbefangenen Betrachter verborgen werden kann.

Auch die US5995638 offenbart eine solche Verwendung einer Mikrolinsenanordnung als Verifikationsmittel.

Zur Herstellung solcher Mikrolinsenanordnungen sind im Stand der Technik verschiedene Techniken bekannt. In der EP 1878 584 A2 wird dazu das Drucken eines optischen Lacks auf ein Trägersubstrat mithilfe einer Tiefdruckplatte offenbart. In der Tiefdruckplatte sind dabei Vertiefungen eingebracht, die die Negativform der gewünschten Linsenanordnung bilden. Weiterhin offenbart diese Schrift auch die Verwendung der Tiefdruckplatten als Prägewerkzeug, mit dessen Hilfe die gewünschte Mikrolinsenanordnung beispielsweise in eine Laminierschicht eingeformt wird. Derartige Verfahren sind auch in der EP 0 698 256 B2 beschrieben, wobei dort alternativ auch die Verwendung von Photoresistschichten in Verbindung mit geeigneten Masken zur Herstellung von Mikrolinsen offenbart wird.

In der DE 10 2006 003 798 A1 wird als weitere Alternative das partielle Auftragen einer Primerschicht genannt, welche eine bereichsweise Veränderung der Oberflächenspannung erzeugt, die zur Herstellung der Mikrolinsen verwendet werden kann.

Aus der letztgenannten Schrift, wie auch aus der WO 2006/016265 A1, ist als weitere Alternative ein Tintenstrahlverfahren bekannt, bei welchem ein transluzenter Kunststoff, beispielsweise ein optischer Lack, auf einer rauen Oberfläche mithilfe eines Tintenstrahl-Druckkopfs in Form von Mikrotröpfchen an den gewünschten Stellen positioniert wird. Bei diesem Verfahren müssen die verwendeten Materialien geeignete Oberflächenspannungen aufweisen, um ein Verlaufen der aufgebrachten flüssigen Mikrotröpfchen zu vermeiden.

Alle bekannten Mikrolinsenanordnungen zeigen einen mehrschichtigen Aufbau und erfordern entsprechend komplexe und vielstufige Herstellungsverfahren. Weiterhin müssen insbesondere bei Tintenstrahlverfahren das Substrat und der zur Erzeugung der Mikrolinsen aufgebrachte Kunststoff im Zusammenspiel bestimmte Eigenschaften zeigen, beispielsweise bezüglich der Oberflächenspannung, um ein ungewolltes Verfließen des beim Aufbringen flüssigen Kunststoffs auf dem Substrat zu vermeiden. Bei den weiterhin bekannten, oben beschriebenen Tiefdruck- und Prägeverfahren muss das exakte Abbild, d.h. die Negativform der zu erzeugenden Mikrolinsen, in die Tiefdruckplatte eingebracht werden, was ebenfalls umfangreiche und komplexe Vorbereitungsschritte zum Bereitstellen einer solchen Tiefdruckplatte im Vorfeld der Herstellung einer Mikrolinsenanordnung bedingt.

In der EP 1147 912 B1 wird die Anwendung einer solchen Mikrolinsenanordnung zur Selbstverifikation in einem Sicherheitsdokument beschrieben. Dazu umfasst ein Sicherheitsdokument beispielsweise in Form einer Banknote ein Sicherheitselement und eine Mikrolinsenanordnung, die mit dem Sicherheitselement durch Falten der Banknote zur Verifikation in Deckung gebracht werden kann. Bei Betrachtung des Sicherheitselements durch die Mikrolinsenanordnung wird für einen Betrachter ein Motiv wahrnehmbar, welches bei direkter Betrachtung des Sicherheitselements nicht sichtbar ist. Das Sicherheitselement ist dabei aufgrund seines mikroskopischen Aufbaus nur schwer nachzuahmen. Dadurch kann der Betrachter die Echtheit der Banknote durch Betrachtung des Sicherheitselements durch die Mikrolinsenanordnung verifizieren.

Weiterhin ist aus der WO 2005/052650 A2 eine Sicherheitsvorrichtung in Form einer Moiré-Vergrößerungseinheit bekannt. Diese besteht aus einem Mikrolinsenraster und einer darunter angeordneten, mit den Mikrolinsenrastern fest verbundenen rasterartigen Mikrobildanordnung, deren Mikrobilder derart angeordnet sind, dass zum einen das Mikrobild in vergrößerter Ansicht als Motiv wahrgenommen werden kann und zum anderen sich beim Verkippen der Sicherheitsvorrichtung ein sogenannter orthoparallaktischer Effekt des Motivs ergibt. Mit anderen Worten bewegt sich das Motiv, hier eine vergrößerte Ansicht eines Mikrobilds, beim Verkippen senkrecht zu der Verkippungsrichtung, was ein leicht wahrnehmbares, jedoch schwer nachahmbares Sicherheitsmerkmal darstellt.

Davon ausgehend liegt der Erfindung die Aufgabe zugrunde eine Sicherheitsanordnung anzugeben, die weitere durch einen Betrachter leicht wahrnehmbare und verifizierbare optische Effekte erzeugt, sowie einen entsprechenden Datenträger anzugeben.

Diese Aufgabe wird erfindungsgemäß durch eine Sicherheitsanordnung mit den Merkmalen des Anspruchs 1 gelöst. Die abhängigen Ansprüche betreffen bevorzugte Ausgestaltungen und Weiterbildungen.

Die erfindungsgemäße Sicherheitsanordnung umfasst ein Sicherheitselement und ein Verifikationsmittel. Das Sicherheitselement umfasst einen bedruckten Bereich und weist zumindest an einem ersten Teilbereich davon ein erstes Mikromotivraster auf. Das Verifikationsmittel wird zur Verifikation des Sicherheitselements in Blickrichtung eines Betrachters vor dem Sicherheitselement positioniert und dazu beispielsweise auf dem Sicherheitselement aufgelegt. Diese Verifikation macht für einen Betrachter zumindest ein erstes Motiv erkennbar, welches in dem Sicherheitselement mit bloßem Auge des Betrachters nicht erkennbar ist. Vorzugsweise ist für den Betrachter auf dem Sicherheitselement bei Betrachtung ohne das Verifikationsmittel überhaupt keine Information wahrnehmbar.

Erfindungsgemäß ist das erste Mikromotivraster des Sicherheitselements derart ausgebildet, dass das erste Motiv ein sogenanntes dynamisches Motiv ist. Mit anderen Worten wird durch Verdrehen des Verifikationsmittels auf bzw. vor dem Sicherheitselement, das heißt durch Verändern der relativen Winkelausrichtung zwischen dem Verifikationsmittel und dem Sicherheitselement, die Größe des bei Verifikation wahrnehmbaren ersten Motivs verändert. Diese Veränderung der Größe zwischen einer ersten relativen Winkelausrichtung und einer zweiten relativen Winkelausrichtung zwischen Verifikationsmittel und Sicherheitselement geschieht kontinuierlich. Somit besitzt das Motiv, welches erst bei Verifikation erkennbar wird, eine zusätzliche dynamische Information, die durch Verdrehen des Verifikationsmittels gezielt veränderbar ist und somit ein weiteres Echtheitsmerkmal zur Verifikation darstellt.

In der erfindungsgemäßen Sicherheitsanordnung wird mit Vorteil von der Tatsache Gebrauch gemacht, dass Sicherheitselement und Verifikationsmittel nicht fest verbunden sind, sondern zwei körperlich getrennte Einheiten bilden, die zur Verifikation relativ zueinander verschoben werden können.

Eine geeignete Ausgestaltung des Mikromotivrasters, die das Auftreten der beschriebenen Effekte gestattet, kann beispielsweise durch Transformationsmatrizen, die die optische Transformation des Verifikationsmittels beschreiben, bestimmt werden.

Vorzugsweise erstreckt sich das erste Mikromotivraster vollflächig über das gesamte Sicherheitselement und das Sicherheitselement besteht somit vorzugsweise aus dem ersten Mikromotivraster.

Erfindungsgemäss ist das Mikromotivraster gemäß einem ersten zweidimensionalen Mikromotivgitter aufgebaut. Ein solches zweidimensionales Gitter besitzt Gitterplätze und Gitterzellen. Auf den Gitterplätzen des Mikromotivgitters sind Mikromotive aufgebracht, welche jeweils vollständig oder auch nur teilweise, das heißt partiell dargestellt sind. Das Verifikationsmittel ist ein Linsenraster, welches gemäß einem ebenfalls zweidimensionalen Gitter, dem sogenannten Linsengitter aufgebaut ist, auf dessen Gitterplätzen Mikrolinsen aufgebracht sind. Mikromotivgitter und Linsengitter weisen einen identischen Gittertyp auf und unterscheiden sich lediglich hinsichtlich der Gitterkonstanten, das heißt der Länge der Gittervektoren, die jeweils das Mikromotiv und das Linsengitter aufbauen.

Allgemein lassen sich zweidimensionale Gitter durch die fünf möglichen zweidimensionalen Bravais-Gitter darstellen. Diese sind das Quadrat-Gitter, das Rechteck-Gitter, das Rauten-Gitter, das Sechseck-Gitter und das Parallelogramm-Gitter. Diese fünf Gittertypen werden jeweils durch zwei Gittervektoren beschrieben. Alternativ können diese fünf Gittertypen auch durch die Länge der beiden Gittervektoren, das heißt durch zwei Gitterkonstanten, und den Zwischenwinkel, das heißt den Winkel zwischen den beiden Gittervektoren beschrieben werden, wobei beim Quadrat- und Rechteck-Gitter, dieser Zwischenwinkel auf 90 Grad festgelegt ist und beim Sechseck-Gitter der Zwischenwinkel auf 60 Grad. Beim Rauten-Gitter und Parallelogramm-Gitter ist der Zwischenwinkel beliebig. Diese fünf Gittertypen weisen verschieden hohe Symmetrien auf, wobei für die vorliegende Erfindung für den Gittertyp von Mikromotiv und Linsengitter Gitter mit niedriger Symmetrie bevorzugt werden. Vorzugsweise ist somit das Mikromotiv- und das Linsengitter ein Parallelogramm-Gitter mit identischem Zwischenwinkel, aber leicht verschiedenen Gitterkonstanten. Alternativ können als Mikromotiv- und das Linsengitter auch jeweils ein Quadratgitter mit leicht verschiedenen Gitterkonstanten verwendet werden. Der relative Unterschied der Gitterkonstanten ist vorzugsweise kleiner als 10%, 5%, 3%, 2% oder 1%. Auch wenn Mikromotiv- und Linsenraster gemäß einem identischen Gittertyp, das heißt mit einem identischen Zwischenwinkel aufgebaut sind, wird durch Verdrehen des Verifikationsmittels auf bzw. vor dem Sicherheitselement die relative Winkelausrichtung zwischen Mikromotivraster und Linsenraster verändert.

Dabei entspricht die erfindungsgemäße Sicherheitsanordnung einer Moiré-Vergrößerungsanordnung, und das bei Verifikation wahrnehmbare erste Motiv ist eine vergrößerte Ansicht der Mikromotive, die auf den Gitterplätzen des Mikromotivgitters angeordnet sind. Durch Drehen des Linsenrasters auf dem Mikromotivraster wird die Vergrößerung einer solchen Moiré-Vergrößerungsanordnung verändert, was zu der beschriebenen Größenveränderung des bei Verifikation wahrnehmbaren Motivs führt.

Ebenfalls möglich ist eine Sicherheitsanordnung einer mikrooptischen Vergrößerungsanordnung vom Moiretyp oder einer Modulo-Vergrößerungsanordnung. Das Funktionsprinzip und die Eigenschaften der vorstehenden mikrooptischen Vergrößerungsanordnungen sind ausführlich in den deutschen Patentanmeldungen DE 10 2005 062 132 A1, DE 10 2007 029 203 A1 und DE 10 2007 029 204 A1 sowie den internationalen Patentanmeldungen WO 2007/076952 A2, WO 2009/000527 A1 und WO 2009/000528 A1 beschrieben.

Vorzugsweise wird das erste Motiv beim Verdrehen von Verifikationsmittel und Sicherheitselement zusätzlich invertiert. Als Mikromotive werden dann bevorzugt graphische Symbole verwendet, welche das Erkennen einer solchen Invertierung gestatten, beispielsweise Buchstaben oder Zahlen.

In einer weiteren bevorzugten Ausgestaltung der erfindungsgemäßen Sicherheitsanordnung sind die ersten, jeweils identischen Mikromotive auf den Gitterplätzen des Mikromotivgitters, aus denen das erste Mikromotivraster in dem ersten Teilbereich aufgebaut ist, vollständig dargestellt. Zudem umfasst das Sicherheitselement in einem zweiten Teilbereich ein zweites Mikromotivraster, welches gemäß einem zweiten zweidimensionalen Mikromotivgitter aufgebaut ist und auf dessen Gitterplätze zweite, jeweils identische Mikromotive vollständig dargestellt, welche von den ersten Mikromotiven verschieden sind. Weiterhin sind das erste und das zweite Mikromotivgitter identisch, das heißt sie besitzen identische Gitterkonstanten und einen identischen Zwischenwinkel zwischen den Gittervektoren. Dennoch können das erste und das zweite Mikromotivraster eine zueinander gewinkelte Ausrichtung aufweisen.

Bei Betrachtung des Sicherheitselementes durch das Verifikationsmittel ist oberhalb des ersten Teilbereichs eine vergrößerte Darstellung des ersten Mikromotivs wahrnehmbar, während oberhalb des zweiten Teilbereichs eine vergrößerte Darstellung des zweiten Mikromotivs wahrnehmbar ist. Weisen weiterhin das erste und das zweite Mikromotivraster eine gewinkelte Ausrichtung zueinander auf, so werden die vergrößerten Ansichten des ersten und des zweiten Mikromotivs in den jeweiligen Teilbereichen mit unterschiedlicher Vergrößerung wahrgenommen. Besitzen das erste und das zweite Mikromotivraster eine identische Ausrichtung, so dass die Gitterplätze beider Mikromotivgitter ein gemeinsames gleichmäßiges Gitter in den beiden Teilbereichen des Sicherheitselements mit jedoch verschiedenen Mikromotiven darstellen, so ist die Vergrößerung der beiden Mikromotive bei gegebener Winkelausrichtung des Linsenrasters in beiden Teilbereichen identisch. In diesem Fall können in beiden Teilbereichen auch identische Mikromotive aufgetragen werden, die sich jedoch hinsichtlich ihrer Farbe unterscheiden und beispielsweise in Blau und in Rot dargestellt sind. Damit wird bei Betrachtung durch das Verifikationsmittel eine vergrößerte Ansicht des gemeinsamen Mikromotivs sichtbar, welche oberhalb des ersten und zweiten Teilbereichs die jeweilige Farbe zeigt. Mit anderen Worten wenn sich die Lage oder Ausdehnung des wahrnehmbaren, vergrößerten Motivs ändert, so ändert sich auch dessen Farbe, wenn das wahrnehmbare Motiv die Bereichsgrenze zwischen dem ersten und dem zweiten Teilbereich überstreicht.

In einer weiter bevorzugten Ausgestaltung weisen das erste und das zweite Motivraster wie beschrieben eine identische Ausrichtung auf und das Linsenraster besitzt eine bevorzugte Winkelausrichtung a zu den beiden Mikromotivrastern. Zumindest der erste Teilbereich weist in einer Richtung eine Ausdehnung, beispielsweise Breite, auf, die die Anordnung von genau n Mikromotiven gestattet. Vorzugsweise wird diese Ausdehnung bzw. diese Breite des ersten Teilbereichs durch n aneinandergehängte Gittervektoren eines der beiden Gittervektoren des zugrunde liegenden Mikromotivgitters beschrieben. Bei der bevorzugten Winkelausrichtung a ist das Mikromotivraster derart gegenüber dem Linsenraster winkelversetzt, dass über die Breite des ersten Teilbereichs ein Versatz der Mikromotive gegenüber den Mikrolinsen entsteht, der einer Gitterkonstante des jeweils anderen Gittervektors des Mikromotivgitters entspricht. Entsprechend wird bei der Winkelausrichtung a innerhalb der Breite des ersten Teilbereichs eine komplette Ansicht eines vergrößerten Mikromotivs sichtbar. Vorzugsweise sind Mikromotivgitter und Linsengitter jeweils Quadrat-Gitter mit nahezu identischen Gitterkonstanten. In diesem Fall gilt: tan a = 1/n. In einer bevorzugten Ausgestaltung weist der erste Teilbereich eine Breite von 12 Symbolen auf und die bevorzugte Winkelausrichtung a beträgt 4,764°.

In ähnlicher Weise kann auch eine geeignete Höhe des ersten Teilbereichs vorgesehen sein, so dass bei der bevorzugten Winkelausrichtung a das vergrößerte Mikromotiv in dem jeweiligen Teilbereich genau einmal dargestellt wird. Im Fall eines Quadrat-Gitters weist somit der erste Teilbereich n x n Mikromotive auf.

Weiterhin können mehrere solcher Teilbereiche nebeneinander angeordnet werden, so dass bei Betrachtung des Verifikationsmittels in jedem Teilbereich genau ein Symbol sichtbar wird. Bestehen diese Symbole aus verschiedenen Buchstaben, so kann somit beispielsweise in nebeneinanderliegenden Teilbereichen ein ganzes Wort sichtbar gemacht werden. Alternativ können die verschiedenen Teilbereiche auch spaltenweise angeordnet werden, mit jeweils einer Breite von n Mikromotiven, so dass mehrere Zeilen mit jeweils dem gleichen Wort entstehen. Weiterhin können die Mikromotive in den jeweiligen Teilbereichen mit unterschiedlicher Farbe aufgetragen werden.

In einer weiteren bevorzugten Ausgestaltung der erfindungsgemäßen Sicherheitsanordnung weist das Sicherheitselement zumindest einen ersten Teilbereich mit einem ersten Mikromotivraster auf und das Linsenraster des Verifikationsmittels besitzt eine bevorzugte Winkelausrichtung a, vorzugsweise 0°, gegenüber dem ersten Mikromotivraster. Aufgrund der leicht unterschiedlichen Gitterkonstanten des Mikromotivgitters und des Linsengitters liegen benachbarte Gitterpunkte des Mikromotivrasters jeweils an verschiedenen Stellen innerhalb der Gitterzelle bei darübergelegtem Linsenraster. Die Mikromotive des Mikromotivrasters sind an sich identisch, sie sind jedoch nur innerhalb der Gitterzelle des Linsenrasters, das heißt in dem entsprechenden Bereich auf dem Sicherheitselement aufgetragen. Im Falle dass ein Mikromotiv nicht vollständig in die entsprechende Gitterzelle des darübergelegten Linsenrasters hineinpasst, ist das Mikromotiv an der Gitterzelle des Linsenrasters abgeschnitten und somit nur partiell auf dem Sicherheitselement aufgebracht. Es werden somit je nach Ausdehnung der Mikromotive und deren Anordnung innerhalb der Gitterzelle des in der bevorzugten Winkelausrichtung darübergelegten Linsenrasters nur Fragmente des ursprünglichen Mikromotivs aufgebracht.

Eine solche Ausgestaltung des Sicherheitselementes hat den Effekt, dass beim Verdrehen des Linsenrasters auf dem Mikromotivraster sich nicht nur die Vergrößerung des vergrößert dargestellten Mikromotivs ändert, sondern sich das vergrößerte Mikromotiv ebenfalls dreht. Diese zusätzliche Drehung des vergrößerten Mikromotivs kann unabhängig von Richtung und Betrag des Drehwinkels des Verifikationsmittels eingestellt werden.

In einer weiteren bevorzugten Ausgestaltung der erfindungsgemäßen Sicherheitsanordnung besitzt das Linsenraster eine bevorzugte Winkelausrichtung a, vorzugsweise 4,764°, relativ zu dem ersten Mikromotivraster. Auf den Gitterplätzen des ersten Mikromotivrasters sind erste und zweite Mikromotive entsprechend der Gitterzellen des Linsenrasters in der bevorzugten Winkelausrichtung a geschnitten aufgebracht, so dass gegebenenfalls an einem gegebenen Gitterpunkt des Mikromotivrasters beide Mikromotive jeweils partiell aufgebracht sind und dabei vorzugsweise aneinandergrenzen.

Dabei variiert je nach Lage des Gitterpunktes des Mikromotivrasters innerhalb der Gitterzelle des Linsenrasters die partielle Darstellung des ersten Mikromotivs von 0% bis 100% und entsprechend die partielle Darstellung des zweiten Mikromotivs von 100% bis 0%.

Durch eine solche winkelabhängige, geschnittene Darstellung zweier Mikromotive bzw. durch den somit entstehenden kontinuierlichen Übergang zwischen zwei Mikromotiven, findet beim Drehen des darübergelegten Linsenrasters ein Informationswechsel zwischen den vergrößerten Darstellung der beiden Mikromotive statt, das heißt je nach Winkelausrichtung des Linsenrasters relativ zu dem Mikromotivraster kann abwechselnd eine vergrößerte Darstellung des ersten und des zweiten Mikromotivs realisiert werden. Die beiden Mikromotive können sich auch hinsichtlich ihrer Farbe unterscheiden. In einer bevorzugten Ausgestaltung sind beide Mikromotive verschiedenfarbige Varianten eines identischen Mikromotivs. Entsprechend kann durch Drehen des Linsenrasters ein Farbwechsel des vergrößerten Mikromotivs realisiert werden.

Ein solcher Informationswechsel kann ebenfalls stattfinden, wenn das Linsenraster auf dem Mikromotivraster in eine geeignete Richtung verschoben wird oder die gesamte Sicherheitsanordnung relativ zur Blickrichtung eines Betrachters verkippt wird.

In einer besonders bevorzugten Ausgestaltung der erfindungsgemäßen Sicherheitsanordnung weist das Sicherheitselement in einem weiteren Teilbereich ein Linienraster, insbesondere ein Linienraster mit Linienverstärkung und/ oder ein als Relief ausgestaltetes Linienraster, ein Strukturraster oder ein weiteres Mikromotivraster auf, welches bei Betrachtung durch das Verifikationselement ein statisches Motiv erkennbar macht. Die Größe des statischen Motivs ändert sich durch Verdrehen des Verifikationsmittels auf bzw. vor dem Sicherheitselement nicht.

Dabei besteht ein Linienraster aus Linien, die bevorzugt einen Winkel von +45°oder -45° gegenüber einem Gittervektor des Linsenrasters in einer bevorzugten Winkelausrichtung a darüber gelegten Linsenrasters aufweisen. Die Linien des Linienrasters haben somit zueinander einen Winkel von 90°. In der bevorzugten Ausgestaltung ist das Linsenraster gemäß einem Quadrat-Gitter aufgebaut. Das statische Motiv ist bei Betrachtung des Sicherheitselements ohne Verifikationsmittel nicht wahrnehmbar, wohingegen bei Betrachtung des weiteren Teilbereichs des Sicherheitselementes durch das Verifikationsmittel das statische Motiv durch den entstehenden Moire-Effekt für einen Betrachter wahrnehmbar wird. Die Rasterweite des Linienrasters wird durch die Gitterkonstante des Linsenrasters des Verifikationsmittels bestimmt.

Vorzugsweise weist das Linienraster eine detaillierte Linienverstärkung auf. Auf diese Weise lassen sich Linienraster erzeugen, die weiterhin bei Betrachtung durch das Verifikationsmittel ein statisches Motiv zeigen, die jedoch weniger auffällig erscheinen und sich zudem besser in das Design integrieren lassen. Alternativ können die Linien des Linienrasters auch in Form einer Codierung gezielt deformiert werden. Derartige Modulationen der Linien des Linienrasters lassen sich insbesondere mit entsprechenden Computerprogrammen erzeugen.

Vorzugsweise ist das statische Motiv nur unter der bevorzugten Winkelausrichtung a sichtbar, ab einer gegebenen Winkelabweichung von der bevorzugten Winkelausrichtung a von beispielsweise mehr als 5° ist das statische Motiv dagegen nicht mehr erkennbar.

In dieser bevorzugten Ausgestaltung umfasst die erfindungsgemäße Sicherheitsanordnung somit einen zumindest ersten Teilbereich mit einem dynamischen Motiv und einen weiteren Teilbereich mit einem statischen Motiv.

Anstelle eines Linienrasters kann auch ein Strukturraster verwendet werden. Dabei weisen die Elemente des Strukturrasters auf Bereichen, die dem Hintergrund und dem Vordergrund des statischen Motivs entsprechen, jeweils eine unterschiedliche Winkelung auf. Im Falle eines Verifikationsmittels mit einem quadratischen Linsengitter beträgt die Winkelung dieser verschiedenen Elemente des Strukturrasters, wie bereits in dem zuvor erläuterten Linienraster, 90°.

In einer besonders bevorzugten Ausgestaltung ist auch in dem weiteren Teilbereich ein Mikromotivraster vorgesehen, wobei die Mikromotive in den Bereichen, die Vorder- und Hintergrund des statischen Motivs bilden, jeweils unterschiedlich ausgebildet sind. Dabei weist die Gestaltung, vorzugsweise die Farbgestaltung, die bereits im Zusammenhang mit dem Strukturraster und Linienraster erläuterte unterschiedliche Winkelung auf, was beispielsweise durch eine teilweise invertierte Darstellung der Mikromotive erreicht werden kann. In einer bevorzugten Ausgestaltung sind die Mikromotive mehrfarbig ausgestaltet, so dass sich bei Betrachtung durch das Verifikationsmittel ein statisches Motiv ergibt, dessen Farbe sich zumindest bei Verschieben des Verifikationsmittels sowie bei Verkippung des Verifikationsmittels und des Sicherheitselementes (Sicherheitsanordnung), und gegebenenfalls auch bei Drehung des Verifikationsmittels entsprechend der durch die Mikromotive gewählten Farben verändert. Vorzugsweise wird im Bereich des Vordergrundes des statischen Motivs die linke Hälfte der Mikromotive mit einer ersten Farbe dargestellt und die rechte Hälfte mit einer zweiten Farbe, wohingegen im Bereich des Hintergrundes des statischen Motives die linke Hälfte der Mikromotive mit der zweiten Farbe dargestellt ist und die rechte Hälfte der Mikromotive mit der ersten Farbe.

Vorzugsweise wird auch das weitere Mikromotivraster in dem weiteren Teilbereich derart ausgebildet, dass sich beim Verdrehen des Verifikationsmittels gegenüber dem Sicherheitselement eine vergrößerte Ansicht der Mikromotive mit je nach Winkelausrichtung einstellbarer Vergrößerung ergibt. Ebenso können in dem weiteren Mikromotivraster auch die weiteren, bereits im Zusammenhang mit anderen bevorzugten Ausgestaltungen beschriebenen Effekte realisiert werden.

In einer weiteren bevorzugten Ausgestaltung umfasst die erfindungsgemäße Sicherheitsanordnung ein Ausrichtmittel, welches eine definierte Positionierung des Verifikationsmittels relativ zu dem Sicherheitselement gestattet. Dies kann im einfachsten Fall durch beispielsweise aufgedruckte Fadenkreuze, die jeweils mit dem Sicherheitselement und dem Verifikationsmittel fest verbunden sind, realisiert werden. Werden diese Fadenkreuze in Deckung gebracht, so wird eine definierte Ausgangslage für das Verifikationsmittel relativ zu dem Sicherheitselement geschaffen.

Alternativ oder zusätzlich kann ein Führungsmittel, beispielsweise ein mechanisches Führungsmittel, das z. B. im Stichtiefdruckverfahren gedruckt bzw. geprägt wird, an dem Sicherheitselement vorgesehen sein, welches mit dem Verifikationsmittel oder einem komplementären Führungsmittel an dem Verifikationsmittel zusammenwirken kann, so dass das Verifikationsmittel gegenüber dem Sicherheitselement auf vorgegebene Art und Weise verschoben und/oder verdreht werden kann. Damit kann in definierter Art und Weise vorgegeben werden, welche Effekte der Betrachter bei Veränderung der Lage des Verifikationsmittels relativ zu dem Sicherheitselement wahrnimmt. So kann das Verifikationsmittel über geprägte Linien geführt verschoben werden, wodurch beispielsweise Bewegungseffekte erzeugt werden können (z. B. Morphing-Effekte oder einfache Bewegungsabläufe bzw. "Cinema"-Effekte, bei denen verschiedene Motive in direkten Sinnzusammenhang stehen).

In einer weiteren bevorzugten Ausgestaltung sind die Mikromotive auf den Gitterplätzen des zumindest ersten Mikromotivrasters oder der gegebenenfalls mehreren Mikromotivraster derart angeordnet, dass sich beim Verkippen der Sicherheitsanordnung und/oder beim Verschieben des Verifikationsmittels auf dem Sicherheitselement entweder ein orthoparallaktischer Effekt des oder der vergrößerten Mikromotive ergibt oder das vergrößerte Mikromotiv zumindest des ersten Teilbereichs bezüglich des Sicherheitselementes ortsfest ist. Ein orthoparallaktischer Effekt liegt vor, wenn beim Verkippen der Sicherheitsanordnung oder Verschieben des Verifikationsmittels sich das vergrößerte Mikromotiv entgegen der Intuition bewegt, vorzugsweise in einem rechten Winkel zu der Verkippung und/oder Verschiebungsrichtung.

In einer weiteren bevorzugten Ausgestaltung weist das Sicherheitselement eine Verprägung vorzugsweise in Form eines Rasters auf, die einen optisch variablen Kippeffekt des Sicherheitselementes bei direkter Betrachtung, das heißt bereits bei Betrachtung ohne das Verifikationsmittel, erzeugt. Die Verprägung ist vorzugsweise eine Mikroverprägung, welche durch den Betrachter mit bloßem Auge nicht erkennbar ist. Die Lage der Verprägung und der Mikromotive des Mikromotivrasters sind derart aufeinander abgestimmt, dass das Sicherheitselement bei unterschiedlichen Betrachtungswinkeln unterschiedliche visuelle Eindrücke erzeugt, da es aufgrund der Mikroverprägungen zu betrachtungswinkelabhängigen Abschattungseffekten der Mikromotive kommt.

In einer weiteren bevorzugten Ausgestaltung weist das Linsenraster des Verifikationsmittels Mikrolinsen mit wenigstens zwei verschiedenen Brennweiten auf oder die Mikrolinsen sind mit einer vorgegebenen Unregelmäßigkeit in dem Verifikationsmittel angeordnet. Dabei weicht die Anordnung der Linsen vorzugsweise von dem für Moiré-Vergrößerungsanordnung üblicherweise erforderlichen festen, regelmäßigen Linsenraster deutlich ab. Damit kann zum einen eine große Gestaltungsfreiheit bei der Ausgestaltung der erfindungsgemäßen Sicherheitsanordnung erzielt werden. Andererseits kann die Information, die notwendig ist, um aus dem Mikromotivraster die gewünschte dynamische oder statische Information zu extrahieren, nicht nur in dem Sicherheitselement, sondern zumindest teilweise auch in dem Verifikationsmittel hinterlegt werden. Somit können die vergrößerten Mikromotive und gegebenenfalls weitere in dem Sicherheitselement hinterlegte, mit bloßem Auge nicht sichtbare Informationen nicht durch möglicherweise leicht verfügbare Linsenraster wahrnehmbar gemacht werden. Erfindungsgemäss weist das Linsenraster des Verifikationsmittels Bereiche in Form eines weiteren statischen Motivs auf, in denen keine Mikrolinsen vorgesehen sind. Die durch das weitere Motiv gebildete Information ist insbesondere eine alphanumerische Zeichenfolge, ein Logo, eine Codierung oder ein graphisches Motiv, das z. B. Objekte jeglicher Art, Pflanzen, Tiere oder Menschen darstellt. Ein derart modifiziertes Linsenraster erhöht die Fälschungssicherheit der erfindungsgemäßen Sicherheitsanordnung. Nimmt der Anteil der nicht mit Mikrolinsen ausgestatteten Bereiche des Linsenrasters zudem nur einen geringen Anteil der Fläche des Verifikationsmittels ein, führt dies zu keinem bzw. einen vernachlässigbaren störenden Effekt auf die mit dem Verifikationsmittel dargestellte vergrößerte Information. Betrifft die Aussparung einen größeren Anteil der Fläche des Linsenrasters von bis zu 50 %, wirkt das Verifikationsmittel allerdings nur im Bereich der Linsen. Erfindungsgemäss sind die Gitterkonstanten von Mikromotivgitter und Linsengitter grösser als 100 µm. In einer weiteren bevorzugten Ausgestaltung der erfindungsgemäßen Sicherheitsanordnung sind die Gitterkonstanten von Mikromotivgitter und Linsengitter größer als 200,300 oder 500 µm. Linsen und Mikromotivgitter mit derart großen Gitterkonstanten haben den Vorteil, dass zum einen die Verifikation des Sicherheitselementes unkritisch gegenüber kleinen, unbeabsichtigten Verschiebungen des Verifikationsmittels über bzw. auf dem Sicherheitselement ist. Dies ist insbesondere dann von Vorteil, wenn die Verifikation von einem Betrachter per Hand durchgeführt wird, da sich somit ein wahrnehmbares Bild ergibt, das sich bei minimalen, unbeabsichtigten Veränderungen der Position des Verifikationsmittels nur minimal, vorzugsweise nicht wahrnehmbar verändert.
In einer weiteren bevorzugten Ausgestaltung der erfindungsgemäßen Sicherheitsanordnung ist das Linsenraster transluzent.

Weiterhin können zum Aufbringen von Mikromotiven in einer Größenordnung von 100 µm oder darüber vorteilhafterweise die beispielsweise im Banknotendruck üblichen Druckverfahren verwendet werden, so dass das oder die Mikromotivraster des Sicherheitselementes ohne gesonderten Arbeitsschritt beispielsweise im Zuge der Banknotenherstellung erzeugt werden können. Dabei können alle bekannten Drucktechniken, wie beispielsweise Flexodruck, Siebdruck, Offsetdruck oder Stich- oder Rastertiefdruck, verwendet werden. Die Mikromotive können dabei sowohl in Positivdarstellung als auch in Negativdarstellung oder Kombinationen davon gedruckt werden. Besonders bevorzugt werden die Mikromotive im Stichtiefdruckverfahren hergestellt, wobei die Vertiefungen in der Stichtiefdruckplatte bevorzugt mithilfe der FIT^{®}-Frästechnologie geschaffen wurden. Durch die im Stichtiefdruck erreichbare sehr feine Auflösung können ausreichend kleine Mikromotive mit hohem Detailgrad aufgedruckt werden.

Die Wahl von Gitterkonstanten größer als 100 µm für das Linsenraster gestattet zudem eine drucktechnische Erzeugung der Mikrolinsen. Bei einer solchen drucktechnischen Erzeugung wird ein transparentes oder transluzentes Trägersubstrat vorstrukturiert, so dass auf einer Vorderseite des Trägersubstrats Erhebungen entstehen und auf einer der Vorderseite gegenüberliegenden Rückseite des Trägersubstrats den Erhebungen im Wesentlichen entsprechende Vertiefungen entstehen. Zumindest in den Vertiefungen auf der Rückseite des vorstrukturierten Trägersubstrats wird anschließend ein transparenter oder transluzenter Kunststoff, vorzugsweise drucktechnisch, aufgebracht, der beim Härten Mikrolinsen, vorzugsweise bikonvexe Mikrolinsen, bildet. Die Mikrolinsen sind mit dem Trägersubstrat nach dem Aushärten fest verbunden und schaffen so das Linsenraster des Verifikationsmittels. Die Durchführung dieses Herstellungsverfahrens vereinfacht sich, wenn die Gitterkonstanten des Linsenrasters größer als 100, 200, 300 oder 500 µm sind. Im Rahmen der vorliegenden Beschreibung bezeichnet der Begriff "Transparenz" die volle Durchsichtigkeit eines Materials, "semitransparent" oder "transluzent" bedeutet durchscheinend im Sinne einer gewissen Lichtdurchlässigkeit, wobei jedoch anders als bei transparenten Materialien hinter transluzenten Materialien befindliche Objekte nur diffus oder gar nicht erkennbar sind. Ein transluzentes Trägersubstrat oder ein transluzenter Kunststoff weist insbesondere eine Lichtdurchlässigkeit von unter 90%, zumeist zwischen 80% und 10% auf. Zur Erzeugung eines transluzenten Linsenrasters sind vorzugsweise sowohl das Trägersubstrat als auch der Kunststoff transluzent ausgebildet, insbesondere weist der Kunststoff dabei eine Lichtdurchlässigkeit zwischen 55 und 10% auf.

Die Erfindung betrifft weiterhin einen Datenträger, welcher eine erfindungsgemäße Sicherheitsanordnung umfasst. Dazu umfasst der Datenträger ein flexibles Substrat in welchem das Sicherheitselement und/oder das Verifikationsmittel der Sicherheitsanordnung angeordnet sind, wobei das Verifikationsmittel in Blickrichtung eines Betrachters vor dem Sicherheitselement angeordnet werden kann. Weiterhin ist der Datenträger derart ausgebildet, dass das Verifikationsmittel bei Anordnung vor dem Sicherheitselement relativ zu diesem verschoben und/oder gedreht werden kann.

In einer bevorzugten Ausgestaltung des Datenträgers umfasst dieser zumindest zwei Sicherheitselemente, wobei das Verifikationsmittel in Blickrichtung des Betrachters jeweils wahlweise vor beiden Sicherheitselementen angeordnet werden kann. Zudem kann das Verifikationsmittel bei Anordnung vor dem jeweiligen Sicherheitselement relativ zu diesem verschoben und/oder verdreht werden, so dass die beschriebenen Effekte mit beiden Sicherheitselementen realisiert werden können. Dies gestattet eine beidseitige Selbstverifikation auf dem Datenträger, das heißt mit einem Verifikationsmittel können beispielsweise durch Falten des Datenträgers wenigstens zwei Sicherheitselemente verifiziert werden. Je nach Ausgestaltung des Datenträgers können auch mehr als zwei Sicherheitselemente mit einem gegebenen Verifikationsmittel verifiziert werden. Dies kann beispielsweise durch ein Vorsehen von mehreren Faltungen bzw. Faltachsen geschehen.

In einer weiteren bevorzugten Ausgestaltung werden in der regelmäßigen Anordnung der Mikromotive in dem Mikromotivraster davon verschiedene Fremd-Mikromotive stochastisch eingebracht, das heißt gemäß einer vorgegebenen Wahrscheinlichkeitsverteilung auf dem Sicherheitselement werden die Mikromotive des Mikromotivrasters durch Fremd-Mikromotive ersetzt oder die Fremd-Mikromotive werden zusätzlich zu den Mikromotiven des Mikromotivrasters aufgebracht. Ein solches stochastisches Einbringen von Fremd-Mikromotiven hat keinen störenden Effekt auf die dargestellte vergrößerte Information, da nur in einem bestimmten Abstand angeordnete Mikromotive des Mikromotivrasters durch den Moire-Vergrößerungseffekt vergrößert werden. Durch ein solches gezieltes Einbringen von Fremd-Mikromotiven wird eine weitere Möglichkeit zur Erhöhung der Fälschungssicherheit der Sicherheitsanordnung geschaffen.

In einer weiteren bevorzugten Ausgestaltung werden die Mikromotive des Mikromotivrasters nach einer Halbtonvorlage moduliert dargestellt, wobei hier der Abstand zwischen den einzelnen Elementen gleich bleibt, Größe und Winkel der Elemente jedoch variabel sind. Ein solches Mikromotivraster erscheint daher als Halbtonbild, bei Betrachtung durch das Verifikationsmittel hingegen ist eine vergrößerte Darstellung der Mikromotive erkennbar. Derartige Modulationen der Mikromotive lassen sich beispielsweise mithilfe von Computerprogrammen erzeugen.

In einer weiteren bevorzugten Ausgestaltung wird an dem Gitter des Mikromotivrasters ein vorgegebene Deformation vorgenommen, beispielsweise mithilfe eines entsprechenden Computerprogramms. Solche Deformationen können insbesondere derart ausgestaltet sein, dass sie ein weiteres Motiv, insbesondere eine geometrische Form oder ein Symbol, z. B. eine Tropfenform oder einen Stern, darstellen. Dadurch kann eine zusätzliche Information in das Sicherheitselement eingebracht werden, die damit eine weitere Möglichkeit zur Erhöhung der Fälschungssicherheit darstellt. Mit Vorteil wird eine solche Deformation an dem Gitter des Mikromotivrasters nur in einem solchen Umfang vorgenommen, dass diese keinen störenden Effekt auf die dargestellte vergrößerte Information bewirkt.

In einer weiteren bevorzugten Ausgestaltung werden verschiedene lumineszierende, d.h. fluoreszierende oder phosphoreszierende Farben in dem Mikromotivraster verwendet. Dazu werden die Mikromotive in zwei unterschiedlich lumineszierenden, insbesondere fluoreszierenden Farben aufgebracht. Wird ein solches Sicherheitselement unter UV-Licht mit bloßem Auge betrachtet, so sind verschiedene fluoreszierende Bereiche in jeweils der ersten und der zweiten Fluoreszenzfarbe wahrnehmbar. Wird das Sicherheitselement jedoch durch ein Verifikationsmittel betrachtet, so überlagern sich die verschiedenfarbigen Fluoreszenzen und es wird eine Mischfarbe der beiden Fluoreszenzfarben sichtbar. In einer besonders bevorzugten Ausgestaltung wird eine gelb und eine blau fluoreszierende Farbe auf das Sicherheitselement aufgetragen, wodurch sich als Mischfarbe Grün ergibt.

Wie bereits erwähnt, können die Motivraster mehrfarbig ausgestaltet sein. Darüber hinaus können die Motivraser alternativ oder zugleich in unterschiedlich lumineszierenden Farben ausgestaltet sein, wie vorstehend beschrieben. Das mit lumineszierenden, d.h. fluoreszierenden oder phosphoreszierenden Farben ausgestaltete Mikromotivraster kann dabei sowohl positiv auch negativ ausgebildet sein.

Die lumineszierenden Farben können gemäß einer weiteren bevorzugten Ausgestaltung auch unabhängig vom Mikromotivraster vollflächig oder mit ausgespartem Motiv, insbesondere auch mehrfarbig aufgebracht werden. Vorteil hierbei ist, dass die beobachtete Lumineszenz fokusunabhängig ist. Beispielsweise kann zumindest ein Teilbereich der erfindungsgemäßen Sicherheitsanordnung mit rot fluoreszierender Farbe bedruckt werden. Wird dann auf das Verifikationsmittel, insbesondere in einem Fensterbereich, ein Lack mit gelber Fluoreszenz aufgebracht und dabei eine Teilfläche des Verifikationsmittels in Form eines Motivs ausgespart, sieht ein Betrachter unter UV-Licht in der ausgesparten Teilfläche eine rote Fluoreszenz, während in der Teilfläche ohne Aussparung als Mischfarbe orange zu sehen ist.

In einer weiteren bevorzugten Ausgestaltung der erfindungsgemäßen Sicherheitsanordnung ist aus einer aufgedruckten Farbschicht des Sicherheitselementes mittels Laser ein vorgegebener Bereich ablatiert, das heißt entfernt. Dadurch kann eine zusätzliche Information in das Sicherheitselement eingebracht werden, welche bei Betrachtung des Sicherheitselementes durch das Verifikationsmittel sichtbar gemacht werden kann.

Im Folgenden wird ein Mikrolinsensubstrat, welches mit Vorteil auch als ein Verifikationsmittel eingesetzt werden kann und welches einfach aufgebaut ist, sowie ein Herstellungsverfahren für Mikrolinsen und für ein solches Mikrolinsensubstrat angegeben, welches eine vereinfachte Herstellung gestattet. Ein geeignetes Mikrolinsensubstrat und ein Herstellungsverfahren für Mikrolinsen und für ein solches Mikrolinsensubstrat sind in weiteren bevorzugten Ausführungsformen beschrieben.

Dem vorstehenden Herstellungsverfahren liegt die Erkenntnis zugrunde, dass ein vorstrukturiertes Trägersubstrat mit Erhebungen und Vertiefungen als Abformkörper zur Herstellung von Mikrolinsen verwendet werden kann. Ein solches vorstrukturiertes Trägersubstrat kann durch Verprägen eines geeigneten Trägersubstrats geschaffen werden. Hierzu können an sich bekannte Prägewerkzeuge verwendet werden. Bevorzugt wird das Trägersubstrat in einem Tiefdruckverfahren blindverprägt. Dabei werden in einer zur Blindverprägung verwendeten Tiefdruckplatte Vertiefungen, insbesondere Gravuren, geschaffen, welche auf dem Trägersubstrat geeignete Prägestrukturen erzeugen. Dabei können beispielsweise anhand von Gravurtiefe und - breite die Form und Abmessung der Erhebungen und Vertiefungen und somit der herzustellenden Mikrolinsen gezielt beeinflusst werden.

Bei der Blindverprägung geschieht das Verprägen mittels einer Tiefdruckplatte ohne Farbfüllung, das heißt in den Vertiefungen der Tiefdruckplatte ist keine Druckfarbe vorgesehen. Dabei geschieht das Verprägen unter sehr hohem Anpressdruck, das heißt zwischen der Tiefdruckplatte und einer Gegendruckplatte, welche mit einem speziellen dünnen Gummituch bespannt sein kann, wirken sehr hohe Kräfte, die ein dauerhaftes Verprägen des Trägersubstrats gewährleisten.

Das Tiefdruckverfahren ist vorzugsweise ein Linien- bzw. Stichtiefdruckverfahren, bei welchem in die Tiefdruckplatte bzw. Stichtiefdruckplatte mithilfe eines manuell oder maschinell geführten, rotierenden Stichels Vertiefungen, beispielsweise in Form von Linien, in die Druckplatte eingraviert werden. Es kann aber auch ein Rastertiefdruck-Verfahren eingesetzt werden, bei welchem die Vertiefungen in die Tiefdruckplatte geätzt werden. Darüber hinaus kann eine Tiefdruckplatte selbstverständlich auch mittels eines geeigneten Lasers mit den vorgesehenen Gravuren versehen werden.

In dem Tiefdruckverfahren wird das Trägersubstrat mittels der Tiefdruckplatte und einer Gegendruckplatte mit hohem Druck verprägt. Aufgrund der Vertiefungen in der Tiefdruckplatte entstehen auf der Vorderseite des Trägersubstrats, welche der Tiefdruckplatte zugewandt ist, Erhebungen und auf der gegenüberliegenden Rückseite des Substrats entsprechende Vertiefungen. Die Vertiefungen in der Tiefdruckplatte sind dabei derart ausgebildet, dass die Erhebungen und/oder die Vertiefungen des verprägten Substrats zum Abformen von Mikrolinsen geeignet sind. Damit wird eine einfache Möglichkeit zur Herstellung von zur Abformung von Mikrolinsen geeigneten Erhebungen und/oder Vertiefungen geschaffen.

Mikrolinsen werden dann hergestellt, indem ein zur Bildung der Mikrolinsen geeigneter vorzugsweise transluzenter Kunststoff auf zumindest eine der beiden Seiten des blindverprägten Trägersubstrats im Bereich der Erhebungen oder Vertiefungen aufgebracht wird. Vorzugsweise werden die Vertiefungen auf der Rückseite des Trägersubstrats mit einem solchen transluzenten Kunststoff befüllt und/oder die Erhebungen auf der Vorderseite des Trägersubstrats mit einem solchen transluzenten Kunststoff vollflächig bedeckt.. Eine transluzente Schicht erlaubt es, die hinter bzw. unter ihr befindlichen Objekte wahrzunehmen, auch wenn durch die transluzente Schicht die Helligkeit der Objekte reduziert und/oder die Farbe der Objekte verändert sein kann. Unter transluzentem Kunststoff wird entsprechend ein semitransparenter Kunststoff, insbesondere ein lasierender Kunststoff, verstanden.

Bei der Herstellung von Mikrolinsen durch Befüllen der Vertiefungen auf der Rückseite des Trägersubstrats mit dem transluzenten Kunststoff wird die räumliche Ausdehnung der Linse auf dem Trägersubstrat nicht nur durch Materialparameter, wie der Oberflächenspannung des transluzenten Kunststoffs auf dem Trägersubstrat, bestimmt, sondern vorteilhafterweise auch durch die räumliche Geometrie der im Substrat erzeugten Vertiefung. Dadurch bestehen mehr Freiheitsgrade bei der Auswahl der Materialien. Zusätzlich wird durch die Vertiefung auch die räumliche Lage des aufgebrachten Kunststoffs bestimmt und auf diese Weise die zu bildende Mikrolinse an der vorgesehenen Position zentriert. Somit ist eine geringere Ortsgenauigkeit beim Aufbringen des transluzenten Kunststoffs erforderlich.

Die Oberflächenform der Mikrolinse wird auf ihrer dem Trägersubstrat zugewandten Seite durch die Form der Vertiefung bestimmt. In diesem Zusammenhang liegt der Erfindung die Erkenntnis zugrunde, dass die Rückseite eines im Stich- oder Rastertiefdruck mit einer entsprechend ausgestalteten Tiefdruckplatte verprägten Trägersubstrats eine für die Ausbildung von Mikrolinsen geeignete nahezu sphärische oder zylinderförmige Prägestruktur aufweist. Eine solche Prägestruktur ergibt sich auf der Rückseite des Trägersubstrats sowohl bei kugel-, pyramiden- bzw. linienförmigen Vertiefungen in der Tiefdruckplatte als auch bei anders gestalteten Gravuren oder Ätzungen. Durch Vertiefungen in der Tiefdruckplatte in Form von konzentrischen Ringen kann auf der Rückseite des Trägersubstrats auch eine Prägestruktur geschaffen werden, die zur Ausbildung einer Fresnellinse geeignet ist.

Beim Füllen der vorzugsweise sphärischen oder zylinderförmigen Prägestruktur auf der Rückseite des Trägersubstrats ergibt sich somit eine kugel- bzw. zylindersymmetrische Linsenoberfläche auf der Seite des Trägersubstrats. Zusätzlich können durch die Form der Vertiefung in der Tiefdruckplatte beispielsweise die Breite und die Höhe der Linse bestimmt werden. Geeignete Techniken zum Einbringen nahezu beliebiger Gravurtiefen und -breiten sind aus dem Stand der Technik bekannt.

Die Form der Mikrolinse auf der dem Trägersubstrat abgewandten Seite wird allgemein durch verschiedene Eigenschaften des Trägersubstrats und des transluzenten Kunststoffs bestimmt, wie durch die Form und das Volumen der Vertiefung, der Menge des in eine solche Vertiefung eingefüllten transluzenten Kunststoffs und der Materialeigenschaften von Trägersubstrat und transluzentem Kunststoff. Vorteilhafterweise wird die Oberflächenspannung des transluzenten Kunststoffs auf dem Trägersubstrat so eingestellt, dass sich für die Linsenoberfläche auf der dem Trägersubstrat abgewandten Seite eine für optische Zwecke geeignete Oberfläche ergibt, beispielsweise eine Linsenoberfläche mit einer kugelbogen- oder parabelförmigen Schnittfläche. Somit wird diese Linsenoberfläche nicht durch ein Prägewerkzeug bestimmt, wie dies aus dem Stand der Technik bekannt ist. Dadurch entfallen einerseits die bislang notwendige Bereitstellung eines solchen hochpräzisen Werkzeugs und andererseits ein entsprechender Prägeschritt, so dass sich das Herstellungsverfahren insgesamt verkürzt und vereinfacht.

Alternativ oder zusätzlich kann auch die Vorderseite des Trägersubstrats mit einem solchen transluzenten Kunststoff zumindest bereichsweise bedeckt werden. Dadurch bilden sich im Bereich der Erhebungen, also im Bereich der durch das Tiefdruckverfahren entstandenen Positivstruktur, konkave Ausformungen in dem aufgebrachten transluzenten Kunststoff aus, wobei ebenfalls Mikrolinsen entstehen. Ein solches Bedecken der Vorderseite des Trägersubstrats dient gleichzeitig dem Erzeugen einer ebenen Oberfläche auf der Vorderseite des Trägersubstrats, dem mechanischen Verstärken des Trägersubstrats und/oder dem gezielten Beeinflussen der optischen Brechkraft der Gesamtanordnung.

Das Trägersubstrat umfasst vorzugsweise Papier und/oder eine Trägerfolie, insbesondere eine transluzente Trägerfolie. Im einfachsten Fall besteht das Trägersubstrat vollständig entweder aus Papier oder aus Kunststoff. Das Trägersubstrat kann jedoch auch bereichsweise aus verschiedenen Materialien bestehen, und insbesondere in einem Bereich aus Papier und zugleich in einem anderen Bereich aus Kunststoff, vorzugsweise aus einer transluzenten Trägerfolie, bestehen. Dadurch ist es möglich, verschiedene Materialien als Trägersubstrat in einem Arbeitsgang zu verprägen. Unter transluzenter Trägerfolie wird hierbei eine semitransparente Trägerfolie verstanden, beispielsweise eine lasierende Trägerfolie, welche beispielsweise Polyamid, Polyester, Polyethylen oder biaxial orientiertes Polypropylen (BOPP) umfasst.

Vorzugsweise wird das Befüllen der Vertiefungen auf der Rückseite des Trägersubstrats derart durchgeführt, dass sich plan- oder bikonvexe Linsen auf der Rückseite des Trägersubstrats ausbilden. Die gewünschte Form der Linsen kann dabei anhand des verwendeten transluzenten Kunststoffs und dessen Trocknungsverhalten, insbesondere durch eine mit dem Trocknen einhergehende Volumenveränderung, beispielsweise eine Volumenreduzierung (Volumenschrumpf), eingestellt werden. Dabei begünstigt der Volumenschrumpf, der bei der Polymerisation bzw. beim Aushärten von UV-härtbaren Lacken auftritt, die Ausbildung von bikonvexen Linsen.

Bikonvexe Linsen zeigen bei gegebener Menge von aufgebrachtem transluzentem Kunststoff oder bei vorgegebener Aufbauhöhe der rückseitig erzeugten Mikrolinsen eine größtmögliche positive Brechkraft und besitzen somit aufgrund der beidseitigen Krümmung gegenüber plan-konvexen Linsen verbesserte optische Eigenschaften. Wenn nun ergänzend weiterer transluzenter Kunststoff auf die Vorderseite eines transluzenten Trägersubstrats aufgebracht wird, ergeben sich im Bereich der Erhebungen konkave, insbesondere plan-konkave Mikrolinsen, welche eine negative Brechkraft aufweisen. Damit kann die positive Brechkraft der rückseitig erzeugten bikonvexen Linsen abgeschwächt und auf diese Weise gezielt die Fokallänge der Gesamtanordnung eingestellt werden. Dies kann anhand der Wahl des Brechungsindex des zur Herstellung der vorderseitigen Mikrolinsen verwendeten transluzenten Kunststoffs geschehen, wobei allgemein mit steigendem Brechungsindex des Linsenmaterials die Brechkraft einer Linse zunimmt. Die erzeugten Mikrolinsen können auf Vorder- und/oder Rückseite des Trägersubstrats prinzipiell sowohl als sphärische Linsen als auch als Zylinderlinsen, insbesondere als geschwungene Zylinderlinsen, ausgebildet werden.

Vorzugsweise sind die in den Vertiefungen auf der Rückseite des Trägersubstrats angeordneten Mikrolinsen voneinander beabstandet und räumlich voneinander getrennt angeordnet. Dadurch bildet sich in jeder Vertiefung eigenständig eine Mikrolinse aus, ohne dass eine gegenseitige Beeinflussung benachbarter Mikrolinsen auftritt. Dabei ist der Abstand benachbarter Mikrolinsen zweckmäßig so gering wie möglich gewählt, um eine möglichst hohe Flächendeckung und damit in Zusammenwirkung beispielsweise mit einem im Folgenden näher erläuterten Sicherheitselement eine kontrastreiche Darstellung zu gewährleisten. Es ist jedoch auch möglich die Mikrolinsen zusammenhängend anzuordnen, so dass sich eine durchgehende, vollflächige Schicht aus transluzentem Kunststoff ergibt, welche die Mikrolinsen umfasst.

Das Befüllen der Vertiefungen auf der Rückseite des Trägersubstrats und/ oder das Bedecken der Vorderseite des Trägersubstrats mit dem transluzenten Kunststoff geschieht mit Vorteil drucktechnisch, beispielsweise im Flexodruck- oder Siebdruckverfahren. Dadurch kann sowohl die Menge als auch der Ort des abgegebenen transparenten Kunststoffs gut gesteuert werden. Insbesondere ist es dadurch möglich, die einzelnen Mikrolinsen auf der Rückseite des Trägersubstrats mit verschiedenen Farben zu erzeugen. Allgemein können durch den Druck variierbare Parameter der Mikrolinsen für jede dieser Mikrolinsen einzeln gewählt werden. Zudem stellen das Flexodruck- und auch das Siebdruckverfahren gängige Druckverfahren dar, mit deren Hilfe auf einfache Art und Weise und somit kostengünstig, sowie mit hoher Geschwindigkeit gedruckt werden kann.

Sollen Bereiche in dem als Verifikationsmittel verwendeten Linsenraster in Form eines Motivs nicht mit Mikrolinsen versehen werden, wie dies vorstehend beschrieben ist, kann der transluzente Kunststoff in diesen Bereich flächig ausgespart werden. Alternativ kann das Motiv auch bereits bei der Vorstrukturierung des später mit Kunststoff zu füllenden Trägersubstrats ausgespart werden, indem beispielsweise in einer bei der Blindverprägung des Trägersubstrats eingesetzten Tiefdruckplatte in den entsprechenden Bereichen keine Vertiefungen vorgesehen werden.

Vorzugsweise weist der aufgebrachte Kunststoff einen hohen Brechungsindex auf und beinhaltet dazu beispielsweise nanoskalische, transparente Teilchen mit hohem anorganischen Pigmentanteil, z. B. Titandioxid oder Zinkoxid. Der Brechungsindex des aufgebrachten Kunststoffs kann auch durch Zugabe von Zink- und/oder Kalziumionen erhöht werden. Eine weitere Möglichkeit ist das Einbringen von transparenten, optisch stark brechenden Kugeln oder Hohlkugeln, welche vorzugsweise aus PMMA (Polymethylmethacrylat) gebildet sind. Vorzugsweise sind die optisch stark brechenden Kugeln oder Hohlkugeln dabei dem Linsengitter entsprechend angeordnet, dass heißt es kommt jeweils eine Kugel oder Hohlkugel in einem der vorstrukturierten Vertiefungen zu liegen.

Weiterhin kann der transluzente Kunststoff auch eingefärbt sein und/oder optisch variable Effektpigmente enthalten. Insbesondere können Dünnschichtpigmente mit Interferenzeffekten, wie das so genannte IRIODIN®, bei dem es sich um mit Metalloxid beschichtete Glimmerpigmente handelt, ferner Pigmente aus flüssigkristallinem Material, deckende Interferenzpigmente (vorzugsweise in kleinen Konzentrationen), sowie lumineszierende, d. h. fluoreszierende oder phosphoreszierende Pigmente eingesetzt werden. Zudem können auch Monomere mit hohem Brechungsindex verwendet werden. Vorzugsweise werden die Pigmente mit einem Gewichtsanteil von bis zu 20 Gew.-% in den Kunststoff eingebracht.

Daneben kann auch das Trägersubstrat zumindest bereichsweise eingefärbt und/oder mit den vorstehend genannten optisch variablen Effektpigmenten beschichtet sein. Vorzugsweise erfolgt ein solche bereichsweise Einfärbung oder Beschichtung in Form eines Motivs.

Materialien mit einem hohen Brechungsindex besitzen vorzugsweise einen Brechungsindex von mehr als 1,5, bevorzugt mehr als 1,6 und besonders bevorzugt mehr als 1,7. Als solche Materialien kommen beispielsweise organische Verbindungen und Kombinationen von organischen Verbindungen in Betracht, die sich zu einem Lacksystem verarbeiten lassen und bei Bestrahlung, insbesondere bei UV- oder Elektronen-Bestrahlung, einer Polyreaktion unterliegen und zu einem Polymermaterial, das heißt einem Polymer, einem Copolymer oder einem Gemisch von Polymeren und/oder Copolymeren mit hohem Brechungsindex vernetzen bzw. aushärten. Als organische Verbindung denkbar sind in diesem Zusammenhang halogenierte Acrylate, Methacrylate oder aromatische Acrylate.

Der zur Bildung der Mikrolinsen aufgebrachte transluzente Kunststoff ist somit vorzugsweise ein optisch wirksamer Lack, welcher in einem weiteren Herstellungsschritt getrocknet oder im Falle von UV-Härtung unmittelbar nach Aufbringung aushärtet und dadurch fixiert wird. Das Trocknen geschieht bei lösungsmittelbasierten Lacken durch Verdampfen des Lösungsmittels, wobei solche lösungsmittelbasierte Lacke aufgrund ihres Trocknungsmechanismus zur Schaffung von Mikrolinsen nur bedingt geeignet sind. Bevorzugt sind daher aushärtbare Lacke, bei denen das Trocknen durch Aushärten, beispielsweise bei einer erhöhten Temperatur oder durch UV-Bestrahlung, geschieht, da der Trocknungsvorgang hierbei keine oder nur eine geringfügige Volumenänderung des aufgebrachten optischen Lacks bedingt und somit die Ausbildung von symmetrischen Mikrolinsen, wie beispielsweise bikonvexen Linsen, unterstützt. Dieser Effekt beruht auf Oberflächen- und Volumenschrumpfungseffekten während des Trocknungsvorgangs.

Als optischer Lack eignet sich hierbei ein nicht mattierter, durch UV-Bestrahlung härtender Lack, d.h. ein Lack, der keine Mattierungsmittel enthält. Beispielsweise ist der optische Lack ein Acrylatsystem mit etwa 5 bis 10% Monomeren, etwa 3 bis 7% Photoinitiatoren und etwa 0,5 bis 1% Silikon- oder Mineralöl-basiertem Entschäumer. Für die Verwendung in einem Flexodruckverfahren liegt die Viskosität des optischen Lacks beim Drucken vorzugsweise zwischen etwa 0,1 und 1 Pas. Für die Verwendung in einem Siebdruckverfahren beträgt die Viskosität vorzugsweise etwa 0,5 bis 5 Pas.

Beispielsweise ist der optische Lack ein Acrylatsystem mit etwa 5 bis 25% Oligomeren (bevorzugt Polyurethanacrylate oder Polyesteracrylate), etwa 5 bis 25% bi- oder multifunktionellen Monomeren auf Basen von Acrylat- oder Methacrylaten, etwa 5 bis 7% Photoinitiatoren, etwa 5 bis 25% Reaktivverdünner (auf Basis von Acrylaten oder Methacrylaten wie beispielsweise 1,6-Hexadiol Diacrylat), etwa 5 bis 15% transparenten Füllstoffen und bis etwa 5% Additiven. Die Viskosität eines solchen optisch wirksamen UV-Siebdrucklacks liegt vorzugsweise im Bereich von 0,5 bis 5,0 Pas bei einer Scherrate von d = 250 s⁻¹ und einer Temperatur von 20 °C.

Es ist prinzipiell möglich, die Materialien des Trägersubstrats und der Mikrolinsen so zu wählen, dass sie sich leicht voneinander trennen lassen, um einzelne Mikrolinsen herzustellen. Zum Herstellen eines Mikrolinsensubstrats werden die Mikrolinsen dagegen mit dem Trägersubstrat fest verbunden. Dazu ist es zweckmäßig, wenn die beiden Materialien ein physikalische oder gegebenenfalls chemische Verbindung eingehen, entweder direkt oder beispielsweise durch Vorsehen einer zusätzlichen Primerschicht.

Vorteilhafterweise werden zum Vorstrukturieren durch Blindverprägen in einer Tiefdruckplatte regelmäßige, beispielsweise rasterartig angeordnete, identische Vertiefungen geschaffen, wodurch eine regelmäßige Anordnung von identischen Mikrolinsen erhalten werden kann und somit ein Mikrolinsenarray erhalten wird. Das blindverprägte Trägersubstrat ist dabei ein Teil des Mikrolinsensubstrats. Gegebenenfalls wird das Mikrolinsensubstrat auf die gewünschte Größe zugeschnitten.

Alternativ können in der Tiefdruckplatte auch Vertiefungen mit verschiedenen Breiten und/oder Tiefen vorgesehen werden. Ebenso kann eine raster- oder gitterartige Anordnung der Vertiefungen mit bereichsweise verschiedenen Winkeln oder eine partielle Anordnung solcher Vertiefungen in geometrischen Formen oder Motiven vorgesehen sein. Damit lassen sich entsprechend verschiedene Vertiefungen und Erhebungen in dem Trägersubstrat schaffen.

Besteht das vorstrukturierte Trägersubstrat bereichsweise oder vollständig aus einer transluzenten Trägerfolie, so wird ein Mikrolinsensubstrat bzw. eine Mikrolinsenfolie geschaffen. Diese kann als Verifikationsmittel für einen Datenträger verwendet werden. Zum Einsatz als Verifikationsmittel wird die Mikrolinsenfolie vorzugsweise mit einem oder vielen Abstandshaltern oder einer zusätzlichen Abstandsschicht versehen, um einen geeigneten Abstand zwischen der Mikrolinsenfolie und einem zu verifizierenden Sicherheitselement sicherzustellen. Vorzugsweise umfasst die Abstandsschicht zusätzlich optisch stark brechende Kugeln oder Hohlkugeln, um die Brechkraft der Mikrolinsenfolie des Verifikationsmittels zu erhöhen.

Die Mikrolinsenfolie ist vorzugsweise spiegelsymmetrisch aufgebaut, wobei sich die Symmetrieebene durch die Mittenebene der bikonvexen Mikrolinsen, parallel zum Trägersubstrat der Mikrolinsenfolie erstreckt. Sie ist insbesondere optisch symmetrisch aufgebaut, so dass die Mikrolinsenfolie als Verifikationsmittel dienen kann, unabhängig von der Richtung aus welcher während der Verifikation durch die Mikrolinsenfolie beobachtet wird. Mit anderen Worten kann von beiden Seiten durch die Mikrolinsenfolie hindurch ein darunterliegendes Sicherheitselement betrachtet werden. Dieser optisch symmetrische bzw. spiegelsymmetrische Aufbau kann dadurch geschaffen werden, dass das Trägersubstrat für den Strahlengang innerhalb der Mikrolinsenfolie keine oder eine nur geringe Rolle spielt, was beispielsweise durch eine ausreichend dünne Schichtdicke des Trägersubstrats sichergestellt werden kann. Ein solches symmetrisches Verifikationsmittel gestattet zum einen eine vereinfachte Handhabung der Mikrolinsenfolie als Verifikationsmittel, da die Verifikation unabhängig von der Betrachtungsrichtung durch die Mikrolinsenfolie hindurch stattfinden kann. Zum anderen kann ein solches symmetrisches Verifikationsmittel vorzugsweise zur Selbstverifikation auf Datenträgern, insbesondere Banknoten, oder auch zur Verifikation von sonstigen auf Datenträgern aufgebrachten Sicherheitselementen eingesetzt werden.

Die vorstehenden Ausführungen zu symmetrischen bzw. optisch symmetrischen Mikrolinsenfolien gelten grundsätzlich auch für asymmetrische Mikrolinsenfolien. Allerdings weisen z.B. plan-konvexe Linsen gegenüber bikonvexen Linsen eine vergrößerte Fokuslänge auf. Demzufolge sind Mikrolinsenfolien mit symmetrischen Linsen im Rahmen der vorliegenden Erfindung, insbesondere zur Verifikation unabhängig von der Betrachtungsrichtung durch die Mikrolinsenfolie, besonders bevorzugt.

Zur Selbstverifikation wird der Datenträger, vorzugsweise eine Banknote, gefaltet und das Verifikationsmittel mit einem Sicherheitselement in Deckung gebracht. Insbesondere bei einem symmetrischen Aufbau des Verifikationsmittels kann das Verifikationsmittel mit Vorteil in verschiedene Richtungen gefaltet werden und dabei mit verschiedenen Sicherheitselementen zur Verifikation zusammenwirken. Dabei ist die Handhabung des Verifikationsmittels bei einem symmetrischen Aufbau der Mikrolinsenfolie für den Betrachter besonders einfach, da die Mikrolinsenfolie für beide Betrachtungsrichtungen die gleiche Fokuslänge aufweist. Beispielsweise kann das Verifikationsmittel um eine Faltachse herum wahlweise auf eine Vorderseite oder eine Rückseite des Datenträgers geklappt werden. Weiterhin können auch mehrere Faltachsen in dem Datenträger vorgesehen sein, wobei das Verifikationsmittel mit jeweils zwei Sicherheitselementen pro Faltachse zusammenwirken kann.

Das Mikrolinsensubstrat, insbesondere in Form einer Mikrolinsenfolie, kann auch zum Erzeugen eines vollständigen Sicherheitsmerkmals für einen Datenträger verwendet werden. Dazu wird vorzugsweise der transluzente Kunststoff der Mikrolinsen und/oder das Trägersubstrat im Bereich der rückseitigen Vertiefungen mit einer geeigneten rasterartigen Mikrobildstruktur versehen, insbesondere bedruckt, wobei der Druck auch vor der Vorstrukturierung des Trägersubstrats erfolgen kann. Dadurch kann ein Mikrorefraktionsbild, vorzugsweise unter Verwendung des Moire-Vergrößerungseffekts, geschaffen werden.

Die vorliegende Erfindung zeichnet sich gegenüber aus dem Stand der Technik bekannten Sicherheitsmerkmalen durch einen sehr viel einfacheren Aufbau und ein entsprechend einfaches Herstellungsverfahren aus. Insbesondere können mehrfarbige Motive und Kippmotive in einfacher Weise geschaffen werden.

Weitere Ausführungsbeispiele und Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit Sicherheitsmerkmalen;
- Fig. 2a und 2b: eine Draufsicht und einen Querschnitt einer erfindungsgemäßen Linsenstruktur;
- Fig. 3a bis 3f: jeweils verschiedene Ausführungsbeispiele einer erfindungsgemäßen Mikrolinsenfolie;
- Fig. 4a bis 4e: jeweils verschiedene Ausführungsbeispiele eines Sicherheitsmerkmals;
- Fig. 5 bis 10: verschiedene Ausführungsbeispiele eines erfindungsgemäßen Sicherheitselements;
- Fig. 11a und 11b: eine erfindungsgemäße Sicherheitsanordnung mit einem Führungsmittel; und
- Fig. 11c: eine erfindungsgemäße Sicherheitsanordnung mit einem alternativen Führungsmittel.

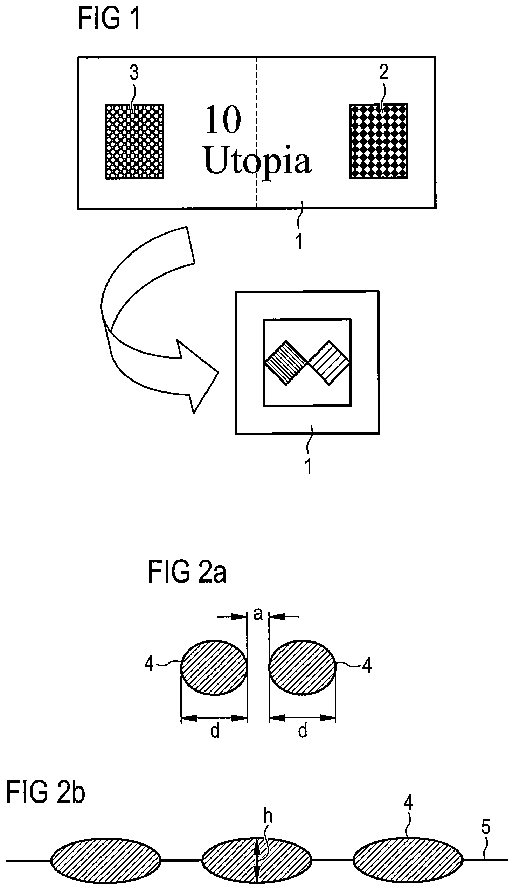

In Fig. 1 ist als Datenträger eine Banknote 1 dargestellt. Diese umfasst ein Sicherheitsmerkmal in Form eines Sicherheitselements 2 und eines Verifikationsmittels 3. Das Verifikationsmittel 3 besteht aus einer Mikrolinsenfolie, während das Sicherheitselement 2 im Ausführungsbeispiel als rasterartige Mikrobildstruktur aufgebaut ist. Das Verifikationsmittel 3 kann durch Falten entlang der in Fig. 1 strichliniert dargestellten Faltachse der Banknote 1 mit dem Sicherheitselement 2 in Deckung gebracht werden, wodurch ein Sicherheitsmerkmal entsteht, wie dies im unteren Teil der Fig. 1 dargestellt ist. Dabei ist die Mikrobildstruktur des Sicherheitselementes 2 beispielsweise aufgrund des Moire-Vergrößerungseffekts vergrößert erkennbar. Eine solche Echtheitsprüfung kann in vielen verschiedenen Varianten ausgestaltet sein. Beispielsweise kann dabei die Durchsicht durch das Verifikationsmittel 3 je nach Aufbau von verschiedenen Seiten erfolgen.

Dazu weist die Mikrolinsenfolie des Verifikationsmittels 3, bedingt durch eine bikonvexe Ausformung der Mikrolinsen, eine Spiegelsymmetrie zu einer Substratebene auf, die durch die Mittenebene der bikonvexen Mikrolinsen 4 verläuft. Bei Vorliegen eines solchen spiegelsymmetrischen Aufbaus des Verifikationsmittels 3, kann eine Beobachtung eines darunterliegenden Sicherheitselements 2 in beide Richtungen durch das Verifikationsmittel 3 erfolgen, wobei dies aufgrund des spiegelsymmetrischen Aufbaus des Verifikationsmittels 3, wie bereits weiter oben erwähnt, für den Betrachter besonders einfach möglich ist, d.h. ein solches Verifikationsmittel weist eine besonders gute Handhabung auf. Entsprechend ist vorgesehen, dass das Verifikationsmittel 3 zur Selbstverifikation durch Falten der Banknote sowohl nach vorne als auch nach hinten geklappt werden kann, um dann wahlweise mit einem auf der Vorderseite oder einem auf der Rückseite der Banknote 1 aufgebrachten Sicherheitselement 2 in Deckung gebracht zu werden. Beim Zusammenwirken von Verifikationsmittel 3 und dem jeweiligen Sicherheitselement 2 wird das jeweils gewünschte Sicherheitsmerkmal ausgebildet.

Als Substratmaterial für den Datenträger kommt im Fall einer Banknote 1 jede Art von Papier in Betracht, insbesondere Baumwoll-Velinpapier. Selbstverständlich kann auch Papier eingesetzt werden, dass einen Anteil x an polymeren Material enthält, wobei x zwischen 0 und 100 Gew.-% liegen kann.

Das Substratmaterial der Banknote 1 bzw. allgemein eines Datenträgers kann auch eine Kunststofffolie, wie etwa eine Polyesterfolie sein. Die Folie kann monoaxial oder biaxial gereckt sein. Eine Reckung der Folie führt unter anderem dazu, dass sie lichtpolarisierende Eigenschaften erhält, die als weiteres Sicherheitsmerkmal genutzt werden können. Das Substratmaterial kann auch ein mehrschichtiger Verbund sein, der wenigstens eine Schicht aus Papier oder einem papierähnlichen Material enthält. Ein solcher Verbund, der auch als Substratmaterial für Banknoten eingesetzt werden kann, zeichnet sich durch eine außerordentlich große Stabilität aus, die für die Haltbarkeit der Note bzw. des Datenträgers von großem Vorteil ist.

Als Substratmaterial kann ferner ein mehrschichtiges, papierfreies Kompositmaterial eingesetzt werden, das insbesondere in manchen Klimaregionen der Erde mit Vorteil eingesetzt werden kann.

Im Allgemeinen kann das erfindungsgemäße Verifikationsmittel mit Vorteil in einem transparenten/transluzenten Bereich des Substrats angeordnet sein. Der transparente/transluzente Bereich kann dadurch realisiert werden, dass in einem opaken Substratmaterial, z.B. Papier, eine fensterartige Durchbrechung vorgesehen wird (Durchgangsöffnung), die durch ein erfindungsgemäßes Verifikationsmittel, z.B. eine Mikrolinsenfolie, im Wesentlichen vollflächig verschlossen wird. Die Durchgangsöffnung kann dabei während der Herstellung des Substrats (sogenanntes "Büttenloch") oder nachträglich durch Schneiden oder Stanzen, insbesondere Laserstrahlschneiden, erzeugt werden.

Alle Substratmaterialien können Zusatzstoffe enthalten, die als Echtheitsmerkmale dienen können. Dabei kommen insbesondere Lumineszenzstoffe infrage, die im sichtbaren Wellenlängenbereich vorzugsweise transparent sind und in einem nicht sichtbaren Wellenlängenbereich durch geeignete Hilfsmittel, wie etwa eine UV- oder IR-Strahlung emittierende Quelle, angeregt werden können, um eine direkt sichtbare oder mit Hilfsmitteln nachweisbare Lumineszenzstrahlung zu erzeugen. Auch die Beschichtung mit flüssigkristallinen Materialien, insbesondere mit flüssigkristallinen Pigmenten ist denkbar.

Das zu verifizierende Sicherheitselement 2 kann im Allgemeinen verschieden aufgebaut sein, beispielsweise als Mikro-Druckbereich mit feiner Punkt- oder Linienrasterstruktur, als Strukturraster mit versteckter Information, als mehrfarbige, übereinandergelegte Rasterstrukturen und/oder als verprägte Rasterstruktur mit und ohne farbführendem Element, beispielsweise mit einer reflektierenden, metallischen Schicht.

Ein starker Interferenz- bzw. Vergrößerungseffekt wird mit einem Linienraster erzielt, dessen Größenordnung der Periodizität der Größenordnung der Periodizität des Verifikationsmittels 3 entspricht und beispielsweise 300 *µ*m beträgt. Dabei beträgt die Breite der Linien jeweils 150 *µ*m und die Breite des jeweils dazwischen liegenden, beispielsweise unbedruckten Weißraums ebenfalls 150 *µ*m.

Bei einem in das Sicherheitselement 2 integrierten Bildmotiv beträgt die Linienmodulation von den hellen bis zu den dunklen Bildbereichen vorzugsweise 50 bis 150 *µ*m. Neben einem einfachen Linienraster kann auch ein Versatzraster verwendet werden.

Statt eines Linienrasters kann das Sicherheitselement 2 auch als ein periodisch wiederkehrendes Motiv oder Symbol vorliegen. Dessen Rapport (Periodizität) wird dabei in Abhängigkeit zu den Prägestrukturen angelegt.

Ein weiterer beim Verifizieren visuell stark wahrnehmbarer Effekt wird mit einem Linienraster im Mehrfarbendruck erzielt. Hierzu werden farbige Linien (beispielsweise CMY, Cyan, Magenta, Yellow) Stoß an Stoß, das heißt direkt aneinanderliegend, gedruckt.

Bei Betrachtung solcher Strukturen durch ein Verifikationsmittel 3 mit einer rasterartigen Mikrolinsenanordnung mit sphärischen Linsen ergibt sich rechtwinklig zu den Untergrundlinien eine starke Vergrößerung mit räumlicher Anmutung. Durch Kippen wird der Eindruck einer fließenden Bewegung erzeugt, wobei die Bewegung jeweils im rechten Winkel zur Kipprichtung erfolgt. Der zugrunde liegende Mechanismus basiert auf dem in den bereits oben erwähnten Artikeln "The moire magnifier" und "Properties of moire magnifiers" beschriebenen Mechanismus.

Die in den nachfolgenden Ausführungsbeispielen gemäß Figuren 2a bis 3f gezeigte Mikrolinsenfolie 6 kann als ein solches Verifikationsmittel 3 für Datenträger 1 gemäß Fig. 1 eingesetzt werden.

Fig. 2a zeigt eine schematische Draufsicht auf zwei benachbarte sphärische Mikrolinsen 4 auf einem nicht dargestellten Trägersubstrat. Die Mikrolinsen 4 besitzen im Ausführungsbeispiel einen Durchmesser d von etwa 500 *µ*m und einen Abstand a von etwa 2 *µ*m. Die räumliche Periodizität einer solchen Mikrolinsenanordnung beträgt somit in etwa 500 *µ*m. In Fig. 2b ist ein schematischer Querschnitt der Mikrolinsenanordnung dargestellt. Neben den Mikrolinsen 4 ist auch das Trägersubstrat 5 schematisch dargestellt. In den dargestellten Ausführungsbeispielen wird das Trägersubstrat 5 im Stichtiefdruckverfahren blindverprägt. Die Mikrolinsen 4 besitzen eine Höhe h von etwa 60 *µ*m. Die Gravurtiefe der Vertiefungen in der für das Verprägen des Trägersubstrats 5 verwendeten Tiefdruckplatte beträgt etwa 100 *µ*m. Die Dicke des Trägersubstrats 5 liegt im Bereich von etwa 15 bis etwa 100 *µ*m und ist im Idealfall vernachlässigbar.

Generell liegen in den Ausführungsbeispielen die Durchmesser bzw. im Fall von Zylinderlinsen die Breite d der Mikrolinsen im Bereich zwischen etwa 50 und etwa 500 *µ*m. Die Gravurtiefen der Vertiefungen in der Tiefdruckplatte liegen im Bereich zwischen etwa 20 und etwa 200 *µ*m und die Gravurbreiten im Bereich zwischen etwa 50 und etwa 500 *µ*m. Da die rückseitigen Prägestrukturen des Trägersubstrats 5 im Wesentlichen vollständig mit optischem Lack gefüllt werden, entspricht die Breite d der Mikrolinsen im Wesentlichen der Gravurbreite. Dies gilt insbesondere dann, wenn die Dicke des Trägersubstrats 5 demgegenüber vernachlässigbar ist.

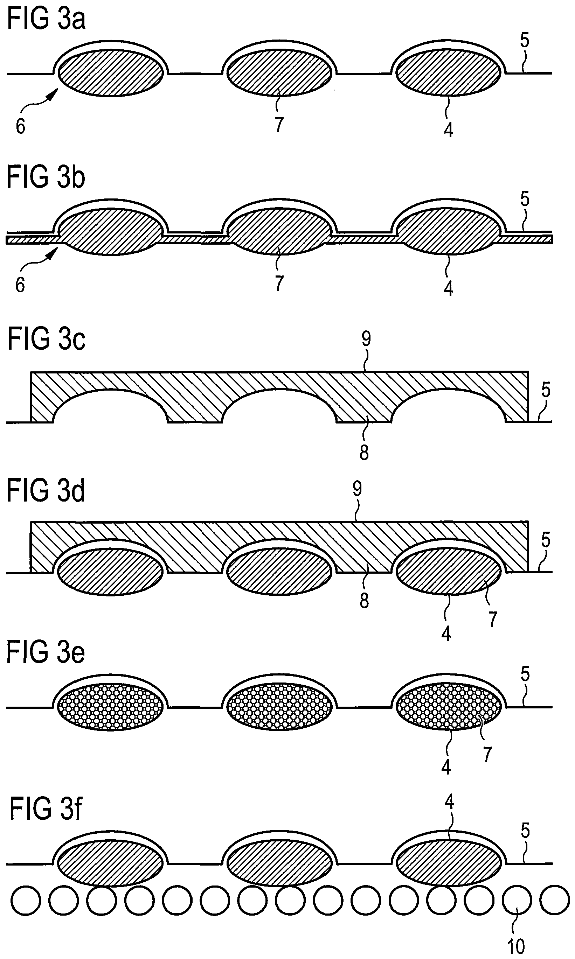

Fig. 3a zeigt schematisch ein erstes Ausführungsbeispiel für eine Mikrolinsenanordnung 6, welche als Verifikationsmittel verwendet werden kann. Das Trägersubstrat 5 ist dabei eine transparente oder transluzente Trägerfolie, welche im Tiefdruckverfahren verprägt wurde. In den dabei auf der Rückseite, d.h. der vorher der Tiefdruckplatte bzw. Stichtiefdruckplatte abgewandten Seite, der Trägerfolie 5 entstandenen Vertiefungen sind Mikrolinsen 4 angeordnet, welche aus einem optisch wirksamen, transluzenten Lack 7 bestehen. Der Lack 7 kann dabei, solange er zumindest lasierend ist, auch farbig sein. Die Mikrolinsen 4 sind hierbei zueinander beabstandet angeordnet.

Alternativ können die Mikrolinsen 4 jedoch auch innerhalb einer durchgehenden, vollflächigen Schicht aus optischem Lack angeordnet sein, wie dies in Fig. 3b dargestellt ist. Die Herstellung von Mikrolinsen in einer durchgehenden Schicht aus optischem Lack ist generell einfacher zu realisieren als die Herstellung einer Vielzahl einzelner Mikrolinsen.

In Fig. 3c ist wiederum eine verprägte Trägerfolie schematisch dargestellt, bei der die Vorderseite mit einer Schicht 9 aus optischem Lack 8 bedeckt ist. Die außen liegende Oberfläche der optischen Lackschicht 9 ist eben, und die optische Lackschicht 9 bildet die durch die Verprägung der Trägerfolie 5 entstandene Positivstruktur ab, so dass in dem Bereich der Erhebungen des Trägersubstrats 5 plan-konkave Mikrolinsen entstehen.

In Fig. 3d ist eine Kombination der Ausführungsbeispiele aus den Figuren 3a und 3c dargestellt. Hierbei sind gleichzeitig die Vertiefungen auf der Rückseite der transparenten oder transluzenten Trägerfolie 5 mit optischem Lack 7 zur Bildung der Mikrolinsen 4 befüllt und die Vorderseite der Trägerfolie 5 mit einer Schicht 9 aus optischem Lack 8 vollflächig bedeckt. Dadurch wird die optische Brechkraft der Mikrolinsen 4 abgeschwächt, wobei dennoch eine positive Brechkraft der Gesamtanordnung verbleibt, da die bikonvexen Mikrolinsen 4 auf der Rückseite der Trägerfolie 5 eine stärkere positive Brechkraft haben als die plan-konkaven Mikrolinsen in der vorderseitigen Lackschicht 9. Auf diese Weise lässt sich unter anderem eine gezielte Beeinflussung der optischen Brechkraft der Mikrolinsenanordnung erreichen.

Das in Fig. 3e dargestellte Ausführungsbeispiel entspricht in seinem räumlichen Aufbau dem in Fig. 3a dargestellten Ausführungsbeispiel. In dem optischen Lack 7 der rückseitig erzeugten Mikrolinsen 4 sind jedoch transparente, optisch stark brechende Kugeln oder Hohlkugeln eingebracht, welche einen hohen Brechungsindex aufweisen und beispielsweise aus PMMA (Polymethylmethacrylat), Polystyrol oder Polycarbonat gefertigt sind. Die Größe der Kugeln liegt im Bereich zwischen 1 und 50 *µ*m und beträgt beispielsweise 2,3,5,10,20 oder 30 *µ*m, je nach den vorliegenden Abmessungen der diese enthaltenden Mikrolinsen. Vorzugsweise befindet sich nur jeweils eine Kugel oder Hohlkugel in jedem der vorstrukturierten Vertiefungen der Trägerfolie 5.

Das in Fig. 3f dargestellte Ausführungsbeispiel baut wiederum auf dem in Fig. 3a dargestellten Ausführungsbeispiel auf. Zusätzlich ist hier eine Abstandsschicht 10 als Abstandshalter vorgesehen. Diese Schicht kann wie dargestellt aus optisch stark brechenden Kugeln oder Hohlkugeln mit einem Durchmesser von beispielsweise etwa 50 *µ*m bestehen. Sie kann jedoch auch aus einer geeigneten Kunststofffolie, beispielsweise in Form eines Etiketts, bestehen. Die Abstandsschicht 10 kann auf die Vorderseite und/oder auf die Rückseite der Trägerfolie 5 aufgebracht werden.

Alternativ zu dem in Fig. 3f gezeigten Ausführungsbeispiel kann ein Abstandshalter auf der Vorderseite des Substrats durch eine Erhebung mit großer Höhe realisiert werden. Solche Erhebungen, die höher als die durch die erfindungsgemäße Vorstrukturierung des Trägersubstrats der Vorderseite gebildeten Erhebungen sind, werden z.B. durch entsprechend tief gravierte Tiefdruckplatten erzeugt.

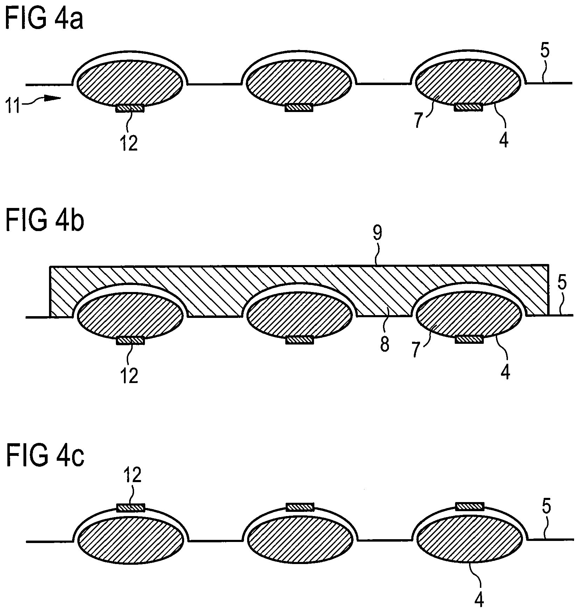

In Fig. 4a ist ein erstes Ausführungsbeispiel eines Sicherheitsmerkmals 11 dargestellt, bei welchem ein Sicherheitselement 2 und ein Verifikationselement 3, beispielsweise eine Mikrolinsenfolie 6, zu einem vollständigen Sicherheitsmerkmal 11 zusammengefasst sind. Mit dem dargestellten Sicherheitsmerkmal 11 kann beispielsweise ein Moire-Vergrößerungseffekt erreicht werden. Zur Herstellung eines Sicherheitsmerkmals 11 wird eine transparente Trägerfolie 5 mit einer halbkugelförmige Vertiefungen aufweisenden Stichtiefdruckplatte blindverprägt und die rückseitigen Vertiefungen mit transluzentem Lack 7 befüllt und getrocknet, um sphärische Mikrolinsen 4 zu erzeugen. Zusätzlich werden die Mikrolinsen 4 mit einer ein- oder mehrfarbigen Rasterstruktur 12 bedruckt. Zum Aufdrucken der Rasterstruktur 12 eignen sich beispielsweise Offset-, Tief-, Flexo- oder Siebdruckverfahren.

Die Mikrolinsen 4 sind dabei rasterartig angeordnet und bilden ein zweidimensionales Bravais-Gitter mit einer vorgewählten Symmetrie. Das Bravais-Gitter kann beispielsweise eine hexagonale Gittersymmetrie aufweisen, es sind jedoch auch Gitter mit einer niedrigeren Symmetrie, insbesondere der Symmetrie eines Parallelogramm-Gitters möglich.

Der Abstand benachbarter Mikrolinsen 4 ist vorzugsweise so gering wie möglich gewählt, um eine möglichst hohe Flächendeckung und damit eine kontrastreiche Darstellung zu gewährleisten. Die sphärisch ausgestalteten Mikrolinsen 4 weisen vorzugsweise einen Durchmesser zwischen etwa 50 *µ*m und etwa 500 *µ*m auf, vorzugsweise größer als 200 *µ*m.

Die auf die der Trägerfolie 5 abgewandten Seite der Mikrolinsen 4 aufgedruckte Rasterstruktur 12 enthält eine rasterartige Anordnung von identischen Mikrobildelementen. Auch die Rasterstruktur 12 bildet ein zweidimensionales Bravais-Gitter mit einer vorgewählten Symmetrie, beispielsweise mit hexagonaler Gittersymmetrie oder der Symmetrie eines Parallelogramm-Gitters.

Um den gewünschten Moiré-Vergrößerungseffekt zu erzeugen, unterscheidet sich das Bravais-Gitter der Mikrobildelemente der Rasterstruktur 12 dabei in seiner Symmetrie und/oder Größe seiner Gitterparameter erfindungsgemäß geringfügig von dem Bravais-Gitter der Mikrolinsen 4. Die Gitterperiode der Mikrobildelemente liegt dabei in derselben Größenordnung wie die der Mikrolinsen 4, also im Bereich von etwa 50 *µ*m und etwa 500 *µ*m, vorzugsweise größer als 200 *µ*m.

Die optische Dicke der Trägerfolie 5 und die Brennweite der Mikrolinsen 4 sind so aufeinander abgestimmt, dass sich die Rasterstruktur 12 und damit die Mikrobildelemente etwa im Abstand der Linsenbrennweite befinden oder in den benötigten Abstand gebracht werden können, beispielsweise zur Selbstverifikation. Aufgrund der sich geringfügig unterscheidenden Gitterparameter sieht der Betrachter bei Betrachtung von oben durch die Mikrolinsen 4 hindurch jeweils einen etwas anderen Teilbereich der Mikrobildelemente, so dass die Vielzahl der Mikrolinsen 4 insgesamt ein vergrößertes Bild der Mikrobildelemente erzeugt. Die sich ergebende Moiré-Vergrößerung hängt dabei von dem relativen Unterschied der Gitterparameter der verwendeten Bravais-Gitter ab. Unterscheiden sich beispielsweise die Gitterperioden zweier hexagonaler Gitter um 1%, so ergibt sich eine 100-fache Moire-Vergrößerung. Für eine ausführlichere Darstellung der Funktionsweise und für vorteilhafte Anordnungen der Mikrobildelementraster und der Mikrolinsenraster wird auf die deutschen Patentanmeldungen DE 10 2005 062 132 A1, DE 10 2007 029 203 A1 und DE 10 2007 029 204 A1 sowie auf die internationalen Patentanmeldungen WO 2007/076952 A2, WO 2009/000527 A1 und WO 2009/000528 A1 verwiesen, deren Offenbarungsgehalt insoweit in die vorliegende Anmeldung aufgenommen wird.
Das in Fig. 4b dargestellte Ausführungsbeispiel entspricht im Aufbau dem in Fig. 4a dargestellten Ausführungsbeispiel, wobei hier jedoch sowohl die rückseitigen Vertiefungen mit transluzentem Lack 7 befüllt sind als auch eine transluzente Lackschicht 9 auf der Vorderseite der transparenten Trägerfolie 5 aufgebracht ist.

In dem in Fig. 4c dargestellten Ausführungsbeispiel wird in einem ersten Verfahrensschritt die ein- oder mehrfarbige Rasterstruktur 12 nicht auf die beispielsweise zylinderförmigen Mikrolinsen 4, sondern auf die transparente Trägerfolie 5 aufgedruckt. Anschließend wird die Trägerfolie 5 im Tiefdruckverfahren verprägt und in die rückseitigen Vertiefungen zur Ausbildung von Mikrolinsen 4 beispielsweise mit transparentem Lack 7 befüllt. Zusätzlich oder alternativ kann wie im Ausführungsbeispiel gemäß Fig. 4b auch auf der Vorderseite der transparenten Trägerfolie 5 eine Schicht 9 aus optischem Lack 8 vorgesehen werden.

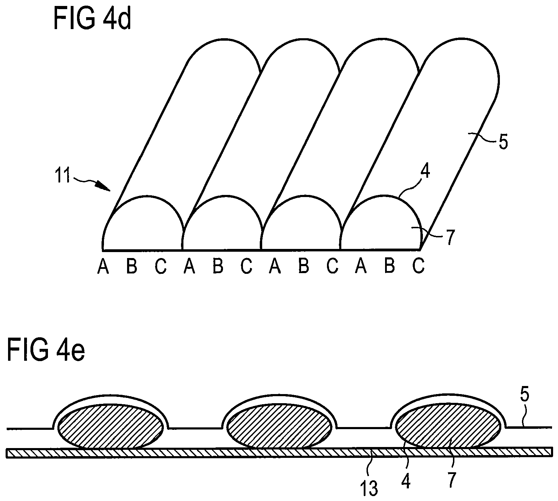

Das in Fig. 4d dargestellte Sicherheitsmerkmal 11 wird durch die folgenden Verfahrensschritte hergestellt:
- Blindverprägen einer zylinderförmigen Struktur in eine transluzente Trägerfolie 5 im Stichtiefdruckverfahren,
- Befüllen der rückseitigen Vertiefungen mit transluzentem Lack 7 zur Ausbildung von Zylinderlinsen 4 und
- Bedrucken der Rückseite im Offset-, Tief-, Flexo- oder Siebdruckverfahren mit ein- oder mehrfarbigen Informationen, welche entsprechend der Zylinderlinsen 4 in Streifen zerlegt sind.

Dabei deuten in Fig. 4d die sich periodisch wiederholenden Buchstaben A, B und C die in Streifen zerlegte Information schematisch an. Es können somit verschiedene Effekte wie Flip-, Zoom-, Morphing-, Cinema- oder dreidimensionale Darstellungen erzeugt werden.

Das in Fig. 4e dargestellte Ausführungsbeispiel des Sicherheitsmerkmals 11 wird durch folgende Verfahrensschritte erhalten:
- Blindverprägen einer beispielsweise sphärischen Struktur in eine transluzente Trägerfolie 5 im Stichtiefdruckverfahren,
- Befüllen von Vertiefungen auf der Rückseite der transluzenten Trägerfolie 5 mit einem transparenten oder farbigen Lack 7 zur Ausbildung von sphärischen Mikrolinsen und
- Aufbringen einer bedruckten Folie 13, beispielsweise in Form eines Etiketts.

Da die Folie 13 bereits vor dem Aufbringen bedruckt wird, kann sie mit Vorteil in einem planen, ebenen Zustand bedruckt werden, vorzugsweise mit einem Offsetdruckverfahren oder auch mit einem Flexo-, Tief- oder Siebdruckverfahren.

Ein weiteres, hier nicht gezeigtes Ausführungsbeispiel des Sicherheitsmerkmals 11 wird durch folgende Verfahrensschritte erhalten:
- Blindverprägen einer beispielsweise sphärischen Struktur in eine transluzente Trägerfolie 5 im Stichtiefdruckverfahren,
- Befüllen von Vertiefungen in der Rückseite der transluzenten Trägerfolie 5 mit transparentem oder farbigem Lack 7 zur Ausbildung von sphärischen Mikrolinsen,
- Aufdrucken einer Abstandsschicht 10 auf den transparenten oder farbigen Lack 7, beispielsweise in Form von lösungsmittelbasiertem Lack oder in Form von in einen Lack eingebrachten, optisch stark brechenden Kugeln, und
- Bedrucken der Abstandsschicht 10 mit einer Rasterstruktur 12.

Ein weiteres Ausführungsbeispiel des Sicherheitsmerkmals 11 wird durch die folgenden Verfahrensschritte erhalten:
- Bedrucken einer transluzenten Trägerfolie 5 mit transluzenter, UVhärtbarer Stichdruckfarbe im Stichtiefdruckverfahren,
- Befüllen der damit erzeugten rückseitigen, beispielsweise linienförmigen Struktur mit transparentem oder farbigem Lack 7 zur Ausbildung von Zylinderlinsen und
- Bedrucken des transparenten oder farbigen Lacks 7 im Offset-, Tief-, Flexo- oder Siebdruck mit einer Rasterstruktur 12.

Durch den Aufdruck einer transluzenten Stichtiefdruckfarbe wird die Dicke der Trägerfolie an dieser Stelle erhöht und damit auch die Dicke der Linse. Auf diese Weise lässt sich die Wandstärke der Linsen gezielt beeinflussen.

Ein weiteres Ausführungsbeispiel des Sicherheitsmerkmals 11 wird durch die folgenden Verfahrensschritte erhalten:
- Untergrunddruck, beispielsweise im Offsetdruckverfahren, auf ein Papiersubstrat,
- gegebenenfalls Aufbringen einer Abstandsschicht 10,
- Aufbringen einer transluzenten Folie 5 auf den Untergrunddruck oder die Abstandsschicht 10,
- Verprägen des gesamten Schichtaufbaus mittels Stich- oder Rastertiefdruck und
- Aufbringen eines transparenten oder farbigen, UV-aushärtbaren Lacks 7 zur Ausbildung von Mikrolinsen 4.

Die Abstandsschicht 10 verstärkt dabei den optischen Effekt.

Ein weiteres Ausführungsbeispiel des Sicherheitsmerkmals 11 wird durch die folgenden Verfahrensschritte erhalten:
- Blindverprägen einer beispielsweise sphärischen Struktur in eine transluzente Trägerfolie 5 im Stichtiefdruckverfahren,
- rückseitiges Aufbringen einer transparenten oder farbigen Schicht, in welche laserablatierbare Farbstoffe (beispielsweise Ruß) eingebracht sind,
- Einbringen einer Bildinformation in diese Schicht mittels Laser und
- ein- oder beidseitiges Aufbringen von Lack 7 bzw. 8 zur Ausbildung von sphärischen Mikrolinsen.

Ein weiteres Ausführungsbeispiel des Sicherheitsmerkmals 11 wird durch die folgenden Verfahrensschritte erhalten:
- Blindverprägen einer beispielsweise linienförmigen Struktur in eine transluzente Trägerfolie 5, die eine Bildinformation enthält, beispielsweise durch Teilmetallisierung, im Stichtiefdruckverfahren und
- ein- oder beidseitiges Aufbringen eines transparenten oder farbigen Lacks 7 bzw. 8 zur Ausbildung von Zylinderlinsen.

Ein weiteres Ausführungsbeispiel des Sicherheitsmerkmals 11 wird durch die folgenden Verfahrensschritte erhalten:
- Blindverprägen einer beispielsweise sphärischen Struktur in eine vollmetallisierte transluzente Folie im Stichtiefdruckverfahren,
- Einbringen einer Bildinformation in die Folie durch Laserablation und
- ein- oder beidseitiges Aufbringen eines transparenten oder farbigen Lacks 7 bzw. 8 zur Ausbildung von sphärischen Mikrolinsen.

In einem weiteren Ausführungsbeispiel des Sicherheitsmerkmals 11 sind in den transparenten oder farbigen Lack 7, 8 zur Bildung der Mikrolinsen 4 Pigmente mit einer spezifischen Mikroinformation eingebracht. Diese Mikroinformation besteht beispielsweise aus einer besonderen Pigmentform oder aus einer Mikroprägung in Form eines Logos. Aufgrund der Linsenwirkung der Mikrolinsen 4 sieht ein Betrachter die Mikroinformation dabei entsprechend vergrößert.

In allen Ausführungsbeispielen kann als Lack 7, 8 zur Bildung der Mikrolinsen 4 transparenter oder farbiger Lack 7, 8 verwendet werden. Insbesondere können in einer Mikrolinsenanordnung gleichzeitig transparente, farbige und auch untereinander verschiedenfarbige Mikrolinsen vorliegen. Weiterhin kann eine nanoskalische Fluoreszenz in den Lack eingebracht werden. Auf diese Weise kann eine zusätzliche makroskopische Information für einen Betrachter eingebracht werden.

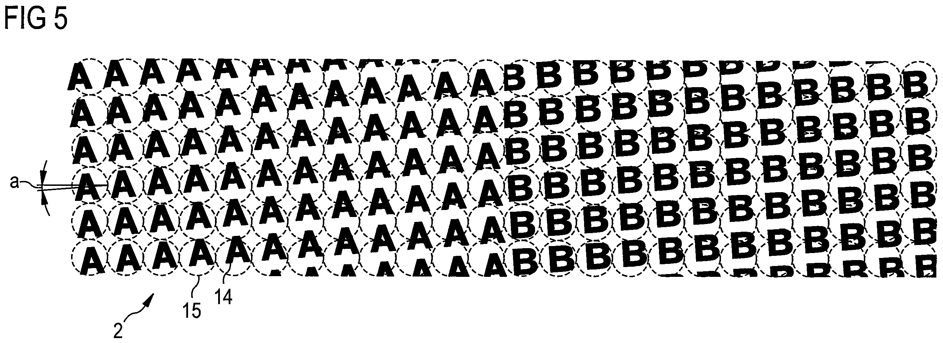

In Fig. 5 ist ein erstes Ausführungsbeispiel eines erfindungsgmäßen Sicherheitselements 2 dargestellt. Dieses weist in einem ersten Teilbereich ein Mikromotivraster mit dem Mikromotiv "A" auf und in einem zweiten Teilbereich ein Mikromotivraster mit dem Mikromotiv "B". Weiterhin sind in Fig. 5 die Positionen der Mikrolinsen 15 des Linsenrasters des Verifikationsmittels 3 anhand von strichlinierten Kreisen dargestellt. Die Gitter der Mikromotivraster in den beiden Teilbereichen des Sicherheitselementes 2 sind identische Quadratgitter mit einer Gitterkonstante von jeweils 0,304 mm. Das Gitter des Linsenrasters ist ebenfalls ein Quadratgitter mit einer Gitterkonstante von 0,302 mm. Das Verifikationsmittel 3 wird bevorzugt derart auf dem Sicherheitselement 2 aufgelegt, dass die Mikromotivraster und das Linsenraster zueinander winkelversetzt angeordnet sind. In dem dargestellten Ausführungsbeispiel beträgt der Vorzugswinkel a = 4,764°. Die beiden Teilbereiche des Sicherheitselements 2 weisen jeweils eine Breite auf, die die Anordnung von jeweils zwölf Mikromotiven 14 gestattet. Dies führt dazu, dass sich die Position der Mikromotive 14 über die Breite der Teilbereiche, das heißt über eine Distanz von zwölf Mikromotiven 14 um genau eine Gitterkonstante des Linsenrasters verschiebt. Bei einer solchen Verschiebung bzw. bei dem in Abhängigkeit von der Anzahl der Mikromotive 14 gewählten Relativwinkel a zwischen Linsenraster und Mikromotivraster ergibt sich eine Vergrößerung der Mikromotive derart, dass innerhalb der Breite der jeweiligen Teilbereiche genau ein vergrößertes Mikromotiv vom Betrachter wahrgenommen wird, wobei sich die verschiedenen Teilbereiche in der Fig. 5 nach oben und unten entsprechend fortsetzen. Durch Drehen des Linsenrasters auf dem Mikromotivraster, das heißt durch Drehen des Verifikationselementes 3 auf dem Sicherheitselement 2, kann die Vergrößerung der Mikromotive 14 eingestellt werden.

Das in Fig. 5 dargestellte Sicherheitselement 2 kann durch weitere Teilbereiche mit gegebenenfalls verschiedenen Mikromotiven 14 ergänzt werden, so dass sich beispielsweise Teilbereiche in Form von Spalten ergeben, die bei Auflegen des Verifikationsmittels 3 unter dem Vorzugswinkel jeweils genau ein vergrößertes Mikromotiv 14 zeigen. Werden beispielsweise für die Mikromotive in den jeweiligen Teilbereichen Buchstaben gewählt, so kann auf diese Art und Weise bei Auflegen des Verifikationsmittels beispielsweise ein ganzes Wort sichtbar gemacht werden.

In einer weiteren nicht dargestellten Variante des Ausführungsbeispiels aus Fig. 5 werden Teilflächen mit jeweils 12 x 12 Mikromotiven 14 vorgesehen. Somit wird bei Auflegen des Verifikationsmittels unter dem Vorzugswinkel a in jedem dieser Teilbereiche jeweils ein vergrößertes Mikromotiv 14 sichtbar.

Weiterhin können in den jeweiligen Teilbereichen Mikromotive 14 mit identischer Gestaltung, aber unterschiedlicher Farbe aufgebracht werden. In diesem Fall können die Teilbereiche mit verschiedenen Farben nicht nur die Form von Spalten und/oder Zeilen annehmen, sondern beliebige geometrische Formen. Somit können sowohl unterschiedliche Informationen bzw. Mikromotive 14 als auch unterschiedliche Farben miteinander kombiniert werden. Weiterhin kann durch eine geeignete Anordnung der Mikromotive 14 auch eine Drehung der vergrößerten Information beim Verdrehen des Verifikationsmittels 3 auf dem Sicherheitselement 2 realisiert werden.

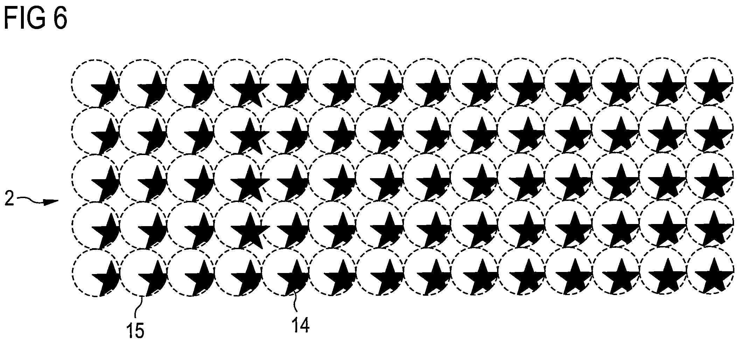

In Fig. 6 ist ein zweites Ausführungsbeispiel eines erfindungsgemäßen Sicherheitselementes dargestellt. Die Gitter des Mikromotivrasters und des Linsenrasters sind, wie bei dem in Fig. 5 dargestellten Ausführungsbeispiel, Quadratgitter mit leicht unterschiedlicher Gitterkonstante. Mikromotivraster und Linsenraster weisen dabei einen Vorzugswinkel a von 0° auf. Entsprechend dieser Winkelausrichtung werden die Mikromotive 14 des Mikromotivrasters teilweise nur partiell dargestellt, und die Teile des Mikromotivs 14, welche außerhalb der darüber liegenden Gitterzelle des Linsenrasters zum Liegen kommt, nicht auf das Sicherheitselement aufgebracht. Mit anderen Worten werden die Mikromotive 14 geschnitten dargestellt. Beim Verdrehen des Linsenrasters auf dem Mikromotivraster wird nicht nur die Vergrößerung der Information bzw. des Mikromotivs 14 verändert. Zusätzlich wird die vergrößerte Information auch selbst gedreht. Somit entsteht der Eindruck, dass sich die vergrößerte Information unter Drehung verkleinert oder vergrößert.

In einer Variante dieses zweiten Ausführungsbeispiels werden in dem Sicherheitselement 2 mehrere Farben verwendet. Das Mikromotivraster kann in mehreren Farben angelegt werden. Beispielsweise können die Farbe des Hintergrundes und der Mikromotive 14 flächenweise beispielsweise in Spalten oder Zeilen oder auch in geometrischen Formen auf dem Sicherheitselement 2 verteilt vorgesehen sein. Bei einer solchen Flächenaufteilung zeigt sich ein Farbeffekt in der vergrößerten Information, je nach dem jeweils unter dem Verifikationsmittel 3 liegenden Flächenabschnitt des Sicherheitselements 2. Weiterhin können die einzelnen Mikromotive 14 in unterschiedlichen Farben aufgebracht sein, wobei in verschiedenen Bereichen des Sicherheitselementes 2 verschiedene Farbaufteilungen der Mikromotive 14 vorgesehen sein können. Dies führt zu einer sogenannten "farbigen Rasterung". Somit kann als vergrößerte Information ein mehrfarbiges vergrößertes Mikromotiv oder gegebenenfalls auch eine Mischfarbe sichtbar gemacht werden.

In einer weiteren Variante werden die Mikromotive alternierend jeweils in einer ersten und in einer zweiten Farbe aufgebracht. Die Mikromotive der ersten Farbe werden in der Richtung eines ersten Gittervektors nur ausschnittsweise aufgebracht, wobei jeweils unterschiedliche Ausschnitte des Mikromotivs aufgetragen werden. Ebenso werden die Mikromotive der zweiten Farbe in Richtung des zweiten Gittervektors nur ausschnittsweise aufgetragen, um 90 Grad gedreht und auf die erste Farbe gelegt. Diese Variante des zweiten Ausführungsbeispiels des Sicherheitselementes 2 zeigt bei Auflegen des Verifikationsmittels 3 eine vergrößerte Variante der Mikromotive, welche beim Verdrehen des Verifikationsmittels 3 abwechselnd die erste und zweite Farbe annimmt.

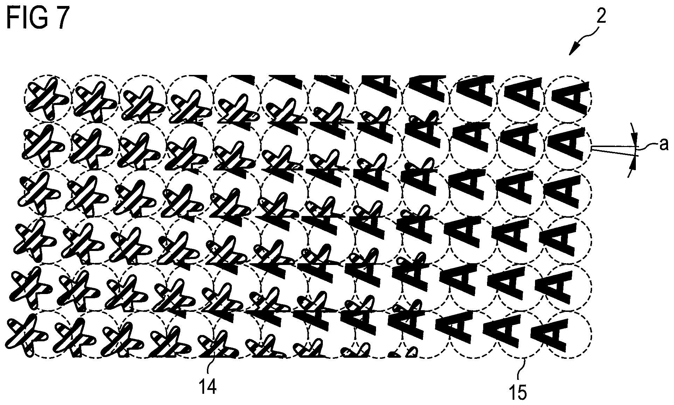

In Fig. 7 ist ein drittes Ausführungsbeispiel eines erfindungsgemäßen Sicherheitselementes 2 dargestellt. Dabei bestehen das Mikromotivraster und das Linsenraster wiederum aus Quadratgittern mit jeweils leicht verschiedenen Gitterkonstanten. Mikromotivraster und Linsenraster weisen einen Vorzugswinkel a auf. Wie in Fig. 7 dargestellt, werden auf dem Mikromotivraster zwei unterschiedliche Mikromotive 14 dargestellt, die in Abhängigkeit des Vorzugswinkels a entsprechend der Anordnung der Gitterzellen des darübergelegten Linsenrasters zerlegt sind. Dabei findet in Abhängigkeit des Versatzes zwischen Mikromotivraster und Linsenraster ein Übergang zwischen den beiden Mikromotiven 14 statt. Im dargestellten Ausführungsbeispiel werden die beiden Mikromotive in waagrechter Richtung zerlegt und entsprechend wieder zusammengesetzt, so dass auf einem Gitterplatz des Mikromotivrasters beide Mikromotive 14 partiell dargestellt werden. Im dargestellten Ausführungsbeispiel beträgt der Vorzugswinkel a = 4,764° und der Übergang zwischen den beiden Mikromotiven findet über eine Länge von zwölf Mikromotiven 14, das heißt über eine Strecke die 12 Gitterkonstanten entspricht, statt. Durch diese Zerschneidung und Ergänzung der beiden Mikromotive 14 und die so erzeugte Anpassung der Aufteilung der Mikromotive 14 an das periodische Linsenraster wird je nach Ausgestaltung der Mikromotive 14 ein Informations- und/oder Farbwechsel erzeugt. Unter einem solchen Informations- und/oder Farbwechsel wird ein Wechsel zwischen der Vergrößerung des ersten Mikromotivs und des zweiten Mikromotivs verstanden. In dem dargestellten Ausführungsbeispiel entspricht die Anzahl der aufgebrachten Mikromotive 14 der Anzahl der Mikrolinsen 15 in dem Linsenraster.

Beim Verdrehen des Linsenrasters auf dem Mikromotivraster tritt ein solcher Informations- und/oder Farbwechsel auf. Mit anderen Worten kann durch Verdrehen des Linsenrasters zwischen den verschiedenen Informationen, das heißt zwischen den verschiedenen vergrößert dargestellten Mikromotiven 14 gewechselt werden. In diesem dritten Ausführungsbeispiel tritt ein Informations- und/oder Farbwechsel zusätzlich auch beim Kippen der Gesamtanordnung um eine erste, waagrechte Kippachse ein. Beim Kippen um eine zweite, senkrechte Kippachse, die zugleich im 90°-Winkel zur ersten Kippachse angeordnet ist, zeigt sich dagegen ein orthoparallaktischer Effekt der vergrößerten Information. Ebenso kann durch Verschieben des Linsenrasters in eine erste, senkrechte Richtung ein Informations- und/oder Farbwechsel erzeugt werden, während sich beim Verschieben des Linsenrasters in eine zweite, waagrechte Richtung, die zugleich im 90°-Winkel zur ersten Richtung angeordnet ist, ebenfalls wieder ein orthoparallaktischer Effekt der dargestellten Information ergibt. Je nach Wahl der ersten und zweiten Verschiebungsrichtung können Informations- und/oder Farbwechsel einerseits bzw. orthoparallaktischer Effekt andererseits auch gerade in umgekehrter Zuordnung zu den Richtungen auftreten oder auch in Kombination auftreten. Entsprechendes gilt auch für die vorstehend erwähnten ersten und zweiten Kippachsen.

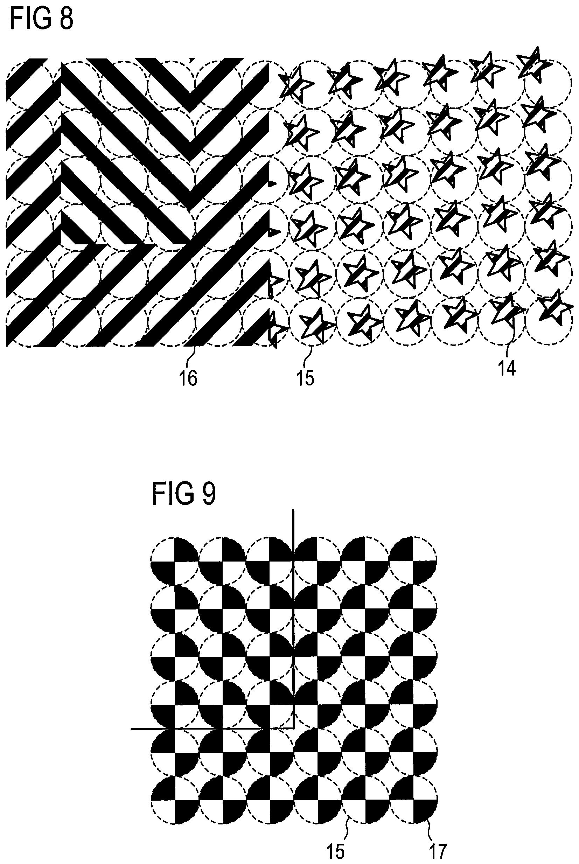

In dem in Fig. 8 dargestellten Ausführungsbeispiel weist das erfindungsgemäße Sicherheitselement zwei Teilbereiche auf, in dem jeweils ein Motivraster mit Mikromotiven 14 und ein Linienraster 16 angeordnet sind. Das Linienrasterfeld, das heißt der Teilbereich mit dem Linienraster 16, ist so aufgebaut, dass sich beim Auflegen des Verifikationsmittels 3 durch den Moire-Effekt ein Motiv ergibt, welches bei direkter Betrachtung des Linienrasters 16 nicht erkennbar ist. Das Linienraster besteht aus Linien, die zueinander einen Winkel von 90° besitzen. Weiterhin besitzt das Linsenraster des Verifikationsmittels 3 einen Vorzugswinkel a, wobei die Linien unter einem Winkel von +45° oder -45° gegenüber den Gittervektoren des Linsenrasters geneigt sind. Die Bereiche, in denen die Linien unter +45° bzw. unter -45° angeordnet sind, bilden jeweils den Vordergrund bzw. den Hintergrund der durch das Linienraster 16 erzeugten Information. Die Rasterweite des Linienrasters wird durch die Gitterkonstante des Linienrasters bestimmt. Die Gitterkonstante des Linsenrasters beträgt in dem dargestellten Ausführungsbeispiel 0,302 mm. Die Rasterweite des Linienrasters 16 beträgt 0,22 mm mit einer Linienstärke von 0,10 mm und einem Zwischenraum von 0,12 mm.

In dem in Fig. 8 auf der rechten Seite dargestellten Teilbereich ist ein Mikromotivraster mit einem quadratischen Gitter und einer Gitterkonstanten von 0,304 mm angebracht. Das Mikromotiv 14 kann dabei wie in den vorherigen Ausführungsbeispielen beschrieben aufgebaut sein und erzeugt eine vergrößerte Ansicht des verwendeten Mikromotivs 14.

Beim Drehen eines aufgelegten Linsenrasters zeigt der Teilbereich des Mikromotivrasters eine veränderliche Vergrößerung des verwendeten Mikromotivs 14 und gegebenenfalls je nach Aufbau des Mikromotivrasters weitere Effekte, wie sie bereits im Zusammenhang mit den vorhergehenden Ausführungsbeispielen beschrieben wurden. Dagegen verändern sich die Umrisse der Information, die das Linienraster 16 einem Betrachter vermittelt, beim Drehen des Linsenrasters nicht. Somit vermittelt das Linienraster dem Betrachter eine statische Information, während das Mikromotivraster dem Betrachter eine dynamische Information vermittelt. Durch die Kombination von Linien und Motivraster in einem Sicherheitselement 2 kann somit ein statisch-dynamischer Kombinationseffekt erzeugt werden. Ebenso zeigt das Mikromotivraster beim Verkippen der gesamten Sicherheitsanordnung oder beim Verschieben des Verifikationsmittels 3, wie bereits beschrieben, einen orthoparallaktischen Effekt oder einen Informations- und/oder Farbwechsel. Dagegen verändern sich die Umrisse der statischen Information, die das Linienraster 16 vermittelt, bei einem solchen Verkippen oder Verschieben nicht. Um die Fälschungssicherheit des Sicherheitselements weiter zu erhöhen, können die Linien des Linienrasters 16 gezielt moduliert werden und beispielsweise gezielt mit Linienverstärkungen versehen werden. Ein solches moduliertes Linienraster zeigt weiterhin bei Betrachtung durch das Verifikationsmittel ein statisches Motiv, erscheint jedoch bei einer Betrachtung ohne Verifikationsmittel weniger auffällig, dass heißt es ist ohne Verifikationsmittel nahezu nicht wahrnehmbar.

Anstelle eines Linienrasters 16 kann alternativ ein Strukturraster verwendet werden, wie dies in Fig. 9 schematisch dargestellt ist. Dabei ist das Strukturraster ähnlich wie das zuvor besprochene Linienraster 16 in unterschiedliche Bereiche eingeteilt, die den Vordergrund und Hintergrund der darzustellenden statischen Information bilden. In Fig. 9 ist zum besseren Verständnis eine durchgezogene Hilfslinie eingezeichnet, die den Bereich des Vordergrunds von dem Bereich des Hintergrunds der statischen Information abgrenzt. Die Elemente 17 des Strukturrasters sind in diesen Bereichen verschieden aufgebaut. Wie in der Figur dargestellt weisen die verschiedenen Elemente 17 eine unterschiedliche Winkelung zueinander auf. Im Falle eines quadratischen Linsengitters, wie dies in Fig. 9 dargestellt ist, beträgt die Winkelung wiederum 90 Grad zueinander. Unter Winkelung von 90° wird vorliegend eine Anordnung der Elemente 17 verstanden, bei der die verschiedenen Elemente durch eine Spiegelung an einer Spiegelebene ineinander überführt werden können. Z.B. können die Elemente 17 des Vordergrunds durch Spiegelung an der die Hilfslinie enthaltenden Spiegelebene in die Elemente 17 des Hintergrunds überführt werden.

Auch in der Ausführungsform der Fig. 9 können durch Kippen des Verifikationsmittels 3 und des Sicherheitselements in verschiedene Kipprichtungen bzw. durch Verschieben oder Drehen des Verifikationsmittels 3 die vorstehend beschriebenen Effekte, wie Informations- und/oder Farbwechsel und orthoparallaktische Effekte, beobachtet werden.

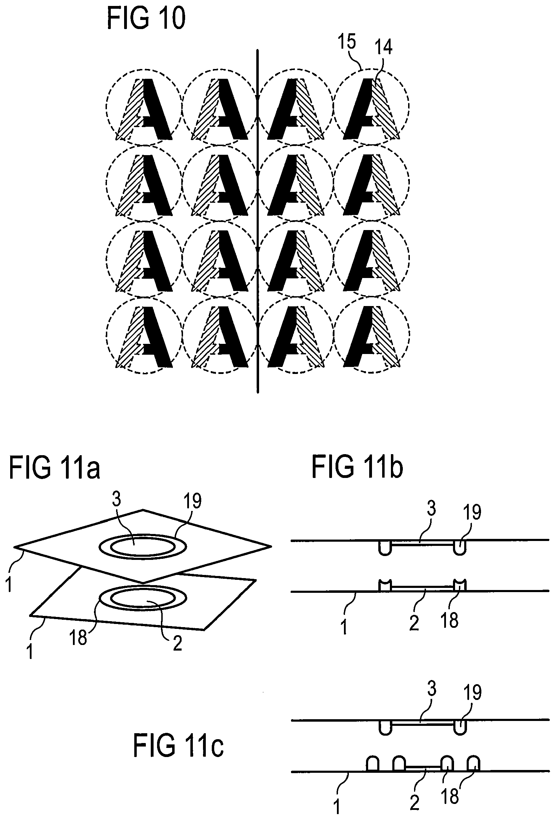

In dem in Fig. 10 dargestellten Ausführungsbeispiel wird mithilfe eines erfindungsgemäßen Mikromotivrasters eine statische Information erzeugt. Dabei sind die einzelnen Mikromotive 14 zweifarbig dargestellt. In dem vorliegenden Ausführungsbeispiel wird der Buchstabe "A" als Mikromotiv 14 verwendet. Dabei ist die linke Hälfte des Buchstabens "A" in einer ersten und die rechte Hälfte in einer zweiten Farbe dargestellt (beispielsweise Cyan und Magenta). In Bereichen, die den Hintergrund, und in Bereichen, die den Vordergrund der statischen Information bilden, ist die Farbgestaltung des Mikromotivs verschieden. In dem dargestellten Ausführungsbeispiel gehen die beiden Mikromotive durch Vertauschen der beiden Farben ineinander über.

Wird auf einem solchen Sicherheitselement 2 das Linsenraster unter dem Vorzugswinkel a aufgelegt, welcher im vorliegenden Ausführungsbeispiel 0° beträgt, so ergibt sich der Vordergrund der statischen Information in der ersten Farbe und der Hintergrund der statischen Information in der zweiten Farbe. Beim Verkippen der Sicherheitsanordnung und Verschieben des Verifikationsmittels in einer ersten bzw. zweiten Richtung (90°-Winkel zur ersten Richtung) springt die Farbe von Vorder- und Hintergrund der statischen Information auf die jeweils andere Farbe um. Beim Drehen des Linsenrasters verändert sich wiederum die Größe des vergrößert dargestellten Mikromotivs 14, wobei das Mikromotiv abhängig von der jeweiligen Vergrößerung in unterschiedlichen Farbanteilen (hier Magenta und Cyan) vom Betrachter wahrgenommen wird. Z.B. erscheint dem Betrachter das Mikromotiv "A" abhängig von der Vergrößerung mit unterschiedlichen Farbanteilen der Farbe Cyan und Magenta.

In einem nicht dargestellten Ausführungsbeispiel wird das Sicherheitselement aufgeteilt in eine erste und eine zweite Farbe, die mit einem Versatz von beispielsweise 45° darübergelegt wird. Bei Auflage eines Linsenrasters ist das vergrößerte Mikromotiv in der ersten Farbe wahrnehmbar und in einer zweiten Winkelausrichtung, die durch Drehen des Linsenrasters um beispielsweise 45° aus der ersten Winkelausrichtung hervorgeht, ist das vergrößerte Mikromotiv in der zweiten Farbe wahrnehmbar.

In einem weiteren ebenfalls nicht dargestellten Ausführungsbeispiel überlagern sich auf dem Sicherheitselement 2 zwei Mikromotivraster. Die beiden Mikromotivraster haben vorzugsweise einen identischen Gittertyp, besitzen jedoch einen zueinander verschiedenen Winkel von beispielsweise 15°, 30°oder 45°. Aufgrund der unterschiedlichen Winkelung der beiden Mikromotivraster werden deren jeweilige Mikromotive 14 bei Betrachtung durch ein Linsenraster aufgrund der unterschiedlichen Winkel zwischen jeweils dem Linsenraster und den beiden Mikromotivrastern unterschiedlich vergrößert. Beispielsweise werden in beiden Rastern die gleichen oder unterschiedliche Mikromotive 14 verwendet, die jedoch in verschiedenen Farben aufgebracht sind. Je nach gewähltem Winkel zwischen Linsenraster und den Mikromotivrastern wird eine vergrößerte Ansicht des Mikromotivs 14 in der ersten Farbe oder eine vergrößerte Ansicht des Mikromotivs 14 in der zweiten Farbe dargestellt, wobei ein kontinuierlicher Übergang zwischen diesen beiden Darstellungen stattfindet. Weiterhin sind die beiden Mikromotivraster derart aufgebaut, dass beim Kippen der Sicherheitsanordnung der orthoparallaktische Effekt der beiden Mikromotivraster gegenläufig ist. Das heißt beispielsweise beim Kippen nach oben bewegen sich die vergrößerten Mikromotive der ersten Farbe nach links und die der zweiten Farbe nach rechts. Ein entsprechender Effekt ergibt sich beim Verkippen in die dazu senkrechte Richtung.

Durch geeignete Wahl der Mikromotive kann somit beim Drehen des Linsenrasters auf den Mikromotivrastern ein Informations- und/oder Farbwechsel erzeugt werden.

In Fig.11a und Fig. 11b ist ein Ausführungsbeispiel eines Führungsmittels 18 dargestellt. In der Sicherheitsanordnung ist mit dem Sicherheitselement 2 ein Führungsmittel 18 fest verbunden, das eine kreisförmige Nut aufweist. Ebenso ist mit dem Verifikationsmittel 3 ein komplementäres Führungsmittel 19 fest verbunden, das eine kreisförmige Nase aufweist. Die Nase des komplementären Führungsmittels 19 greift beim Auflegen des Verifikationsmittels 3 auf das Sicherheitselement 2 in die Nut des Führungsmittels 18 ein. Dadurch geschieht das Verdrehen des Verifikationsmittels 3 auf bzw. vor dem Sicherheitselement 2 in einer geführten Art und Weise, so dass die Effekte, die der Betrachter bei der Verifikation des Sicherheitselements 2 wahrnimmt leicht reproduzierbar sind. Zudem kann über die Höhe der Nase des komplementären Führungsmittels 19 und/oder der Nut des Führungsmittels 18 ein geeigneter Abstand von Verifikationsmittel 3 und Sicherheitselement 2 eingestellt werden.

Durch eine zusätzliche Aussparung an einer gegebenen Winkelposition in Umfangsrichtung der Nut des Führungsmittels 18 und eine komplementäre zusätzliche Nase an einer gegebenen Winkelposition in Umfangsrichtung der Nase des komplementären Führungsmittels 19 kann weiterhin ein relativer Vorzugswinkel zwischen Sicherheitselement 2 und Verifikationsmittel 3 geschaffen werden.

In Fig. 11c ist ein weiteres Ausführungsbeispiel eines Führungsmittels 18 dargestellt, das aus zwei kreisförmigen Nasen besteht, welche derart beabstandet sind, dass das mit Bezug auf Fig. 11a und Fig.11b beschriebene komplementäre Führungsmittel 19 beim Auflegen des Verifikationsmittels 3 auf das Sicherheitselement 2 in den Bereich zwischen beiden Nasen des Führungsmittels 18 eingreifen kann. Die Führungsmittel 18 und 19 der Fig.11c können, wie auch die oben beschriebenen Führungsmittel 18 und 19 der Fig. 11a und Fig. 11b, durch geeignete Prägetechniken, insbesondere mittels einer Tiefdruckplatte in das Substrat eingebracht werden.

Selbstverständlich können durch ein- bzw. zweiseitiges Prägen des Substrats auch andere nicht weiter gezeigte komplementäre Führungsmittel erhalten werden.

## Patentansprüche

1. Sicherheitsanordnung umfassend:
- ein Sicherheitselement, welches zumindest in einem ersten Teilbereich ein erstes Mikromotivraster aufweist, und
- ein Verifikationsmittel, welches zur Verifikation des Sicherheitselements in Blickrichtung eines Betrachters vor dem Sicherheitselement angeordnet wird, und dabei für einen Betrachter zumindest ein erstes Motiv erkennbar macht, welches auf dem Sicherheitselement nicht erkennbar ist,
wobei das erste Mikromotivraster derart ausgebildet ist, dass das erste Motiv ein dynamisches Motiv ist, dessen Größe durch Verdrehen des Verifikationsmittels zwischen einer ersten und einer zweiten Winkelausrichtung relativ zu dem Sicherheitselement veränderbar ist, und wobei das Mikromotivraster gemäß einem ersten zweidimensionalen Mikromotivgitter aufgebaut ist, auf dessen Gitterplätzen partielle oder vollständige erste Mikromotive aufgebracht sind, und das Verifikationsmittel ein Linsenraster ist, welches gemäß einem zweidimensionalen Linsengitter aufgebaut ist, auf dessen Gitterplätzen Mikrolinsen aufgebracht sind, wobei Mikromotiv- und Linsengitter einen identischen Gittertyp aufweisen und sich nur hinsichtlich ihrer Gitterkonstanten unterscheiden, und wobei das erste Motiv eine vergrößerte Ansicht der Mikromotive ist, **dadurch gekennzeichnet, dass** das Linsenraster Bereiche in Form eines weiteren statischen Motivs aufweist, in denen keine Mikrolinsen vorgesehen sind, und dass die Gitterkonstanten von Mikromotiv- und Linsengitter größer als 100 µm sind.

2. Sicherheitsanordnung nach Anspruch 1, **dadurch gekennzeichnet, dass** die ersten Mikromotive vollständig aufgebracht sind, und das Sicherheitselement in einem zweiten Teilbereich ein zweites Mikromotivraster aufweist, welches gemäß einem zweiten zweidimensionalen Mikromotivgitter aufgebaut ist, auf dessen Gitterplätzen vollständige zweite Mikromotive angeordnet sind, wobei das erste und das zweite Mikromotivgitter eine identische Gitterstruktur aufweisen und das erste und das zweite Mikromotivraster bevorzugt eine gewinkelte Ausrichtung aufweisen, insbesondere dass das erste und das zweite Mikromotivraster eine identische Ausrichtung aufweisen, zumindest in dem ersten Teilbereich genau n, vorzugsweise zwölf, erste Mikromotive in Richtung eines Gittervektors des ersten Mikromotivgitters aufgebracht sind, der erste Teilbereich eine entsprechende Ausdehnung in der Richtung dieses Gittervektors aufweist, und das Linsenraster eine bevorzugte Winkelausrichtung a, vorzugsweise 4,764°, relativ zu den Mikromotivrastern aufweist, wobei vorzugsweise gilt tan a =1/n.

3. Sicherheitsanordnung nach Anspruch 1, **dadurch gekennzeichnet, dass** das Linsenraster eine bevorzugte Winkelausrichtung a, vorzugsweise 0°, relativ zu dem ersten Mikromotivraster aufweist, und die ersten Mikromotive des ersten Mikromotivrasters jeweils nur innerhalb der Gitterzelle des Linsenrasters aufgebracht sind, in der der jeweilige Gitterpunkt des Mikromotivrasters bei der bevorzugten Winkelausrichtung zu liegen kommt.

4. Sicherheitsanordnung nach Anspruch 1, **dadurch gekennzeichnet, dass** das Linsenraster eine bevorzugte Winkelausrichtung a relativ zu dem ersten Mikromotivraster aufweist, und auf den Gitterplätzen des ersten Mikromotivrasters erste und zweite Mikromotive entsprechend der Gitterzellen des Linsenrasters in der bevorzugten Winkelausrichtung geschnitten aufgebracht sind.

5. Sicherheitsanordnung nach einem der vorhergehenden Ansprüche, **dadurch gekennzeichnet, dass** das Sicherheitselement in einem weiteren Teilbereich ein Linienraster, ein Strukturraster oder ein weiteres Mikromotivraster aufweist, das bei Betrachtung durch das Verifikationselement ein statisches Motiv erkennbar macht, dessen Größe durch Verdrehen des Verifikationsmittels relativ zu dem Sicherheitselement nicht veränderbar ist, insbesondere dass das weitere Mikromotivraster bei Verifikation zusätzlich ein dynamisches Motiv zeigt und das weitere Mikromotivraster vorzugsweise zweifarbige Mikromotive umfasst, die eine bereichsweise verschiedene Farbgestaltung aufweisen.

6. Sicherheitsanordnung nach einem der vorhergehenden Ansprüche **gekennzeichnet durch** ein Ausrichtmittel, welches eine definierte Positionierung des Verifikationsmittels relativ zu dem Sicherheitselement gestattet, oder ein Führungsmittel des Sicherheitselements, welches mit dem Verifikationsmittel oder einem komplementären Führungsmittel des Verifikationsmittels zusammenwirken kann, so dass das Verifikationsmittel gegenüber dem Sicherheitselement in vorbestimmter Weise verschoben und/ oder verdreht werden kann.

7. Sicherheitsanordnung nach einem der vorhergehenden Ansprüche, **dadurch gekennzeichnet, dass** die Mikromotive derart auf den Gitterplätzen ausgerichtet sind, dass sich bei Verkippen der Sicherheitsanordnung und/ oder bei Verschieben des Verifikationsmittels auf dem Sicherheitselement ein orthoparallaktischer Effekt des ersten Motivs ergibt oder das erste Motiv bezüglich des Sicherheitselements ortsfest ist.

8. Sicherheitsanordnung nach einem der vorhergehenden Ansprüche, **dadurch gekennzeichnet, dass** das Sicherheitselement eine Verprägung, vorzugsweise in Form eines Rasters, aufweist, die einen optisch variablen Kippeffekt des Sicherheitselements erzeugt.

9. Sicherheitsanordnung nach einem der Ansprüche 1 bis 8, **dadurch gekennzeichnet, dass** das Linsenraster Mikrolinsen mit wenigstens zwei verschiedenen Brennweiten oder Mikrolinsen in einer unregelmäßigen Anordnung aufweist.

10. Sicherheitsanordnung nach einem der Ansprüche 1 bis 9, **dadurch gekennzeichnet, dass** die Gitterkonstanten von Mikromotiv- und Linsengitter größer als 200, 300 oder 500 µm sind.

11. Sicherheitsanordnung nach einem der Ansprüche 1 bis 10, **dadurch gekennzeichnet, dass** das Linsenraster transluzent ist.

12. Datenträger, umfassend ein flexibles Substrat mit einer Sicherheitsanordnung nach einem der vorhergehenden Ansprüche, wobei das Verifikationsmittel in Blickrichtung eines Betrachters vor dem Sicherheitselement angeordnet werden kann, **dadurch gekennzeichnet, dass** das Verifikationsmittel dabei relativ zu dem Sicherheitselement verschoben und/oder verdreht werden kann.

13. Datenträger nach Anspruch 12, umfassend zumindest zwei, vorzugsweise auf verschiedenen Seiten des Datenträgers angeordnete Sicherheitselemente, vor welchen das Verifikationsmittel in Blickrichtung eines Betrachters wahlweise angeordnet werden kann.

## Claims

1. A security arrangement comprising:
a security element having at least in a first partial region a first micromotif grid, and a verification means which is arranged for verification of the security element in the viewing direction of a viewer in front of the security element, and thereby makes at least one first motif recognizable to a viewer, said motif not being recognizable on the security element, wherein the first micromotif grid is configured such that the first motif is a dynamic motif, the size of which can be changed by rotating the verification means between a first and a second angular orientation relative to the security element, and wherein the micromotif grid is constructed according to a first two-dimensional micromotif lattice on the lattice sites of which partial or complete first micromotifs are applied, and the verification means is a lenticular grid which is constructed according to a two-dimensional lenticular lattice on the lattice sites of which microlenses are applied, wherein the micromotif lattice and the lenticular lattice have an identical lattice type and differ from each other only with regard to their lattice constants, and wherein the first motif is a magnified view of the micromotifs, **characterized in that** the lenticular grid has regions in the form of a further static motif in which no microlenses are provided, and that the lattice constants of the micromotif lattice and the lenticular lattice are larger than 100 µm.

2. The security arrangement according to claim 1, **characterized in that** the first micromotifs are applied completely and the security element in a second partial region has a second micromotif grid constructed according to a second two-dimensional micromotif lattice on the lattice sites of which complete second micromotifs are arranged, wherein the first and the second micromotif lattice have an identical lattice structure and the first and the second micromotif grid preferably have an angular orientation, in particular that the first and the second micromotif grid have an identical orientation, at least in the first partial region there are applied precisely n, preferably twelve, first micromotifs in the direction of a lattice vector of the first micromotif lattice, the first partial region has a corresponding extension in the direction of said lattice vector, and the lenticular grid has a preferred angular orientation a, preferably 4,764°, relative to the micromotif grids, wherein there is preferably valid tan a = 1/n.

3. The security arrangement according to claim 1, **characterized in that** the lenticular grid has a preferred angular orientation a, preferably 0°, relative to the first micromotif grid, and the first micromotifs of the first micromotif grid are respectively applied only within the lattice cell of the lenticular grid in which the respective lattice point of the micromotif grid comes to lie in the preferred angular orientation.

4. The security arrangement according to claim 1, **characterized in that** the lenticular grid has a preferred angular orientation a relative to the first micromotif grid, and on the lattice sites of the first micromotif grid there are applied sectionally first and second micromotifs corresponding to the lattice cells of the lenticular grid in the preferred angular orientation.

5. The security arrangement according to any of the preceding claims, **characterized in that** the security element in a further partial region has a line grid, a structure grid or a further micromotif grid which, upon viewing trough the verification element, makes recognizable a static motif the size of which cannot be changed by rotating the verification means relative to the security element, in particular that the further micromotif grid, upon verification, additionally shows a dynamic motif and the further micromotif grid preferably includes bicolor micromotifs that have a regionally different color design.

6. The security arrangement according to any of the preceding claims, **characterized by** an alignment means which permits a defined positioning of the verification means relative to the security element, or a guiding means of the security element which can interact with the verification means or a complementary guiding means of the verification means so that the verification means can be shifted and/or rotated in predetermined fashion vis-a-vis the security element.

7. The security arrangement according to any of the preceding claims, **characterized in that** the micromotifs are so oriented on the lattice sites that, upon tilting the security arrangement and/or upon shifting the verification means on the security element, there results an orthoparallactic effect of the first motif or the first motif is stationary with reference to the security element.

8. The security arrangement according to any of the preceding claims, **characterized in that** the security element has an embossing, preferably in the form of a grid, which generates an optically variable tilting effect of the security element.

9. The security arrangement according to any of the claims 1 to 8, **characterized in that** the lenticular grid has microlenses with at least two different focal lengths or microlenses in an irregular arrangement.

10. The security arrangement according to any of the claims 1 to 9, **characterized in that** the lattice constants of the micromotif and the lenticular lattice are larger than 200, 300 or 500 µm.

11. The security arrangement according to any of the claims 1 to 10, **characterized in that** the lenticular grid is translucent.

12. A data carrier, comprising a flexible substrate with a security arrangement according to any of the preceding claims, wherein the verification means can be arranged in the viewing direction of a viewer in front of the security element, **characterized in that** therein the verification means can be shifted and/or rotated relative to the security element.

13. The data carrier according to claim 12, comprising at least two security elements preferably arranged on different sides of the data carrier, in front of which security elements the verification means can be arranged selectively in the viewing direction of a viewer.

## Revendications

1. Agencement de sécurité comprenant :
- un élément de sécurité qui comporte au moins dans une première zone partielle une première trame de micromotif, et
- un moyen de vérification qui, pour la vérification de l'élément de sécurité, est agencé, dans le sens du regard d'un observateur, avant l'élément de sécurité et rend alors reconnaissable pour un observateur au moins un premier motif non reconnaissable sur l'élément de sécurité,
la première trame de micromotif étant conçue de telle façon que le premier motif est un motif dynamique dont la taille peut être modifiée par rotation du moyen de vérification entre une première et une deuxième orientation angulaire relativement à l'élément de sécurité (2), et la trame de micromotif étant structurée suivant une première grille bidimensionnelle de micromotif, sur les emplacements de grille de laquelle des premiers micromotifs partiels ou entiers sont appliqués, et le moyen de vérification étant une trame lenticulaire structurée suivant une grille bidimensionnelle lenticulaire, sur les emplacements de grille de laquelle des microlentilles sont appliquées, la grille de micromotif et la grille lenticulaire présentant un type identique de grille et ne se distinguant que par leurs constantes de grille, et le premier motif étant une vue agrandie des micromotifs, **caractérisé en ce que** la trame lenticulaire comporte des zones sous forme d'un autre motif statique dans lesquelles des microlentilles ne sont pas prévues, et **en ce que** les constantes de grille de la grille de micromotif et de la grille lenticulaire sont supérieures à 100 µm.

2. Agencement de sécurité selon la revendication 1, **caractérisé en ce que** les premiers micromotifs sont entièrement appliqués, et que l'élément de sécurité comporte dans une deuxième zone partielle une deuxième trame de micromotif structurée suivant une deuxième grille bidimensionnelle de micromotif, sur les emplacements de grille de laquelle des deuxièmes micromotifs, entiers, sont agencés, la première grille et la deuxième grille de micromotif présentant une structure identique de grille et la première et la deuxième trame de micromotif présentant de préférence une orientation angulée, en particulier **en ce que** la première et la deuxième trame de micromotif présentent une orientation identique, que, au moins dans la première zone partielle, exactement n, de préférence douze, premiers micromotifs sont appliqués dans le sens d'un vecteur de grille de la première grille de micromotif, que la première zone partielle présente une extension correspondante dans le sens de ce vecteur de grille , et que la grille lenticulaire présente une orientation angulaire préférée a, de préférence 4,764°, relativement aux trames de micromotif, on ayant en l'occurrence de préférence tan a = 1 / n.

3. Agencement de sécurité selon la revendication 1, **caractérisé en ce que** la trame lenticulaire présente une orientation angulaire préférée a, de préférence 0°, relativement à la première trame de micromotif, et **en ce que** les premiers micromotifs de la première trame de micromotif ne sont respectivement appliqués qu'à l'intérieur de la cellule de grille de la trame lenticulaire dans laquelle le point de grille respectif de la trame de micromotif se positionne dans l'orientation angulaire préférée.

4. Agencement de sécurité selon la revendication 1, **caractérisé en ce que** la trame lenticulaire présente une orientation angulaire préférée a relativement à la première trame de micromotif, et **en ce que**, sur les emplacements de grille de la première trame de micromotif, des premiers et deuxièmes micromotifs sont appliqués, de manière correspondante aux cellules de grille de la trame lenticulaire, en section dans l'orientation angulaire préférée.

5. Agencement de sécurité selon une des revendications précédentes, **caractérisé en ce que** l'élément de sécurité comporte, dans une autre zone partielle, une trame lignée, une trame structurelle ou une autre trame de micromotif qui, lors d'une observation à travers l'élément de vérification, rend reconnaissable un motif statique dont la taille ne peut pas être modifiée par rotation du moyen de vérification relativement à l'élément de sécurité, en particulier **en ce que** l'autre trame de micromotif montre lors de la vérification un motif dynamique et que l'autre trame de micromotif comprend de préférence des micromotifs bicolores qui présentent une configuration de couleurs différente suivant les zones.

6. Agencement de sécurité selon une des revendications précédentes, **caractérisé par** un moyen d'alignement qui permet un positionnement défini du moyen de vérification relativement à l'élément de sécurité, ou un moyen de guidage de l'élément de sécurité qui peut co-agir avec le moyen de vérification ou avec un moyen complémentaire de guidage du moyen de vérification, de telle sorte que le moyen de vérification peut être déplacé et/ou tourné d'une façon prédéterminée par rapport à l'élément de sécurité.

7. Agencement de sécurité selon une des revendications précédentes, **caractérisé en ce que** les micromotifs sont alignés de telle façon sur les emplacements de grille que, dans le cas d'un basculement de l'agencement de sécurité et/ou dans le cas d'un déplacement du moyen de vérification sur l'élément de sécurité, un effet orthoparallactique du premier motif se produit, ou que le premier motif est stationnaire par rapport à l'élément de sécurité.

8. Agencement de sécurité selon une des revendications précédentes, **caractérisé en ce que** l'élément de sécurité comporte une empreinte, de préférence sous forme d'une trame, qui génère un effet optiquement variable de basculement de l'élément de sécurité.

9. Agencement de sécurité selon une des revendications de 1 à 8, **caractérisé en ce que** la trame lenticulaire comporte des microlentilles ayant au moins deux distances focales différentes ou des microlentilles dans un agencement irrégulier.

10. Agencement de sécurité selon une des revendications de 1 à 9, **caractérisé en ce que** les constantes de grille de la grille de micromotif et de la grille lenticulaire sont supérieures à 200, 300 ou 500 µm.

11. Agencement de sécurité selon une des revendications de 1 à 10, **caractérisé en ce que** la trame lenticulaire est translucide.

12. Support de données comprenant un substrat flexible ayant un agencement de sécurité selon une des revendications précédentes, le moyen de vérification pouvant être agencé, dans le sens du regard d'un observateur, avant l'élément de sécurité, **caractérisé en ce que** le moyen de vérification peut alors être déplacé et/ou tourné relativement à l'élément de sécurité.

13. Support de données selon la revendication 12, comprenant au moins deux éléments de sécurité agencés de préférence sur différents côtés du support de données et devant lesquels le moyen de vérification peut être sélectivement agencé dans le sens du regard d'un observateur.
